# EUROPEAN PATENT APPLICATION

(11) **EP 2 567 961 A1**
(43) Date of publication of application: **13.03.2013**
(21) Application number: 11180533.9
(22) Date of filing: 08.09.2011
(51) Int. Cl.: C07F 9/30, C07F 9/38, C07F 9/40, C07F 9/572, C07F 9/655

(54) **Method for the manufacture of compounds containing an alpha-oxyphosphorus group by using an activator**

(71) Applicant: Straitmark Holding AG, 6300 Zug (CH)
(72) Inventor: Burck, Sebastian R. W., 1348 Louvain-La-Neuve (BE); Notté, Patrick, 1300 Wavre (BE)
(74) Representative: Rippel, Hans Christoph

(57) **Abstract**

A method for the manufacture of compounds containing an α-oxy phosphorus group is disclosed. A compound containing an α-oxy carboxylic acid group is reacted in a specific equivalent ratio with a nucleophilic P component, wherein the phosphorus atom has the oxidation state +1 or +3, whereby the compound containing an α-oxy carboxylic acid group or the nucleophilic P component or both are first reacted with an activator, followed by conducting the reaction and adding a water at the end of the reaction. The compounds containing an α-oxy phosphorus group formed are then recovered.

## Description

This invention pertains to a method for the manufacture of compounds containing an α-oxy phosphorus group, having the formula:

-O¹-C¹-P¹(O)< -I-

by reacting a compound containing an α-oxy carboxylic acid group with a nucleophilic P component, wherein the phosphorus atom has the oxidation state +1 or +3, whereby the compound containing an α-oxy carboxylic acid group or the nucleophilic P component or both are first reacted with an activator. After completing the reaction water can be added at the end of the reaction and the compound containing an α-oxy phosphorus group formed is recovered. The reaction releases carbon monoxide as a result of the conversion of the α-oxy carboxylic acid function.

The prior art is silent and non-suggestive concerning the synthesis of compounds containing an α-oxy phosphorus group starting from compounds containing an α-oxy carboxylic acid group by either activating the compounds containing an α-oxy carboxylic acid group, a nucleophilic P component or both.

Synthetic approaches towards α-oxy phosphonates starting from an α-oxy carboxylic acid have been reported e.g. for the synthesis of acyclic nucleoside phosphonates. The reaction proceeds via decarboxylative reduction of the α-oxy carboxylic acid function to a vinylether function followed by the addition of the hydroxyl function of hydroxymethyl phosphonic ester. This method introduces a "preformed" α-oxy phosphonic acid moiety rather than replacing the carboxylic acid function by a phosphonic acid group.

[W02006015261A2] [R.L. Mackman et al., Bio. Med. Chem. 2007, 15, 5519-5528; R.L. Mackman et al., Bio. Med. Chem. Let. 2007, 17, 6875-6879; R.L. Mackman et al., Bio. Med. Chem. Let. 2008, 18, 1116-1119; C.G. Boojarma et al., Bio. Med. Chem. Let. 2007, 18, 1120-1123; R.L. Mackman et al., Bio. Med. Chem. 2010, 18, 3606-3617]

A further approach involves the cleavage of α-oxy phosphonic acid esters with chlorotrimethylsilane [A.J. Gutierrez et al, Nucleos. Nucleot. Nucl. 2001, 20(4-7), 1299-1302] or bromotrimethylsilane [T. Haemers et al., Bioorg. Med. Chem. 2008, 16(6), 3361-3371], requiring the synthesis of the appropriate α-oxy phosphonic acid esters in a multistep synthesis before.

α-oxy phosphonic acids can be obtained directly by reaction of formals with PCl₃ and subsequent hydrolysis. [K.A. Petrov et al, Zh. Obshch. Khim. 1980, 50(5), 1021-1026] A major disadvantage of this route is the very low yield.

While thus the synthesis of α-oxy phosphonates is known, this state of the art is of little economical value considering the frequently complex multistep methods and the fact that low yields, low purity and low selectivity are achieved. This entails the formation of significant levels of low-value products.

It is a major object of this invention to provide a method starting from the corresponding compounds containing an α-oxy carboxylic acid group and a nucleophilic P component for the manufacture of compounds containing an α-oxy phosphorus group. It is another object of this invention to provide a method for the manufacture of compounds containing an α-oxy phosphorus group with high yields of the phosphorus derivatives. Yet another object of the invention aims at selecting reagents which can be used to yield compounds containing an α-oxy phosphorus group in high yield and purity. Still another object of the invention contemplates the manufacture of compounds containing an α-oxy phosphorus group with high purity and selectivity. Still another aim of the invention resides in defining a method arrangement capable of yielding specific compounds containing an α-oxy phosphorus group under virtual exclusion of LOOPS (as defined below) to thus ensure a safe operation capable of producing high yields. Still another object of the invention pertains to generating compounds containing an α-oxy phosphorus group with a large variety of substituents on the α-oxy fragment.

The term "percent" or "%" as used throughout this application stands, unless defined otherwise, for "percent by weight" or "% by weight". The terms "phosphonic acid" and "phosphonate" are also used interchangeably depending, of course, upon medium prevailing alkalinity/acidity conditions. The term "ppm" stands for "parts per million". Unless defined otherwise, pH values are measured at 25°C on the reaction medium as such. The term "ambient" with respect to temperature and pressure means terrestrial conditions usually prevailing at sea level, i.e. temperature is between 18°C-25°C and pressure stands for 990-1050 mm Hg. The term "adjuvant" defines classes of compounds which can be present during the reaction to provide benefits while being unaffected as a result of the reaction. The term "LOOPS" means "low oxides of phosphorus". Reported yields have been determined by ³¹P-NMR. The chemical structure of all compounds has been established by combined ³¹P- and ¹H-NMR studies. The term "cyclic" embraces cyclic, alkylcyclic, alkylenecyclic, alkylalkylenecyclic and cyclic e.g. methylene cyclopentyl or methylcyclopentyl or methylmethylenecyclopentyl or cyclopentyl. The term "aromatic" embraces aromatic, alkylaromatic, alkylenearomatic and alkylalkylenearomatic. The terms "cyclic" or "aromatic" imply with respect to "cyclic" a structure of minimum 3 carbon atoms, with respect to "aromatic" a structure of at least 6 carbon atoms. The terms "heterocyclic" and "heteroaromatic" imply the formal replacement of 1, 2 or 3 carbon atoms in a "cyclic" or "aromatic" structure by a heteroatom of e.g. N, O or S or combinations thereof. The term "heteroaromatic" can also be represented by 5 membered rings, wherein at least one carbon atom is replaced by N, O or S.

The term "activator" embraces specific classes of compounds that react with carboxylic acid functions yielding an activated carboxylic acid function -COL wherein L is a good leaving group. Likewise, activators can react with >P-OH or >P(O)H functions to produce >P-L functions and with a P(III)-O-P(III,V) moiety to produce two P(III)-L functions or one P(III)-L and one P(V)-L function.

The term "nucleophilic P component" embraces phosphorus compounds containing >P-OH or >P(O)H functions and/or at least one P(III)-O-P(III,V) moiety, wherein the phosphorus atom possesses a lone pair /p, or a function that can tautomerise into a lone pair, an example for the latter case is the tautomerisation between phosphonic acid (HO)₂P(O)H and phosphorous acid (HO)₃P(/p).

The term "compound containing an α-oxy carboxylic acid group" means that the described compound can either be a molecular or a polymeric structure wherein one or more α-oxy carboxylic acid groups are present. Consequently, the terms "nucleophilic P component" and "compound containing an α-oxy phosphorus group" mean that the described compounds can either be a molecular or a polymeric structure, and that in the "compound containing an α-oxy phosphorus group" one or more α-oxy phosphorus groups are present. This procedure provides a method for the conversion of at least one α-oxy carboxylic acid function of a compound containing α-oxy carboxylic acid groups into an α-oxy phosphorus group.

The term "equivalent ratio" means equivalent molar ratio.

The foregoing and other objects can now be met by reacting compounds containing an α-oxy carboxylic acid group with a nucleophilic P component, wherein the phosphorus atom has the oxidation state +1 or +3, whereby the compound containing an α-oxy carboxylic acid group or the nucleophilic P component or both are first reacted with an activator.

The compound containing an α-oxy carboxylic acid group can be represented by the free acid or by partially or fully neutralized species thereof. Suitable counter ions for the neutralized α-oxy carboxylic acid are alkaline, earth alkaline, ammonium and protonated amine species. The use of compounds with neutralized or partially neutralized α-oxy carboxylic acid functions could require an additional adjuvant with a lower pKa than the corresponding value of the α-oxy carboxylic acid function, which is added at the outset of the reaction in an amount at least sufficient to convert all the neutralized or partially neutralized carboxylic acid functions into the corresponding free carboxylic acid functions.

This invention concerns a method for the manufacture of compounds containing an α-oxy phosphorus group having the formula:

-O¹-C¹-P¹(O)< -I-

comprising the steps of:
reacting a compound containing an α-oxy carboxylic acid group having the formula:

   -O¹-C¹-COOM' -II-

   wherein the oxygen atom O¹ carries two substituents whereby the first substituent is C¹ and the second can be selected from a H or a C atom carrying three further substituents; wherein the carbon atom C¹ carries four substituents whereby the first substituent is O¹, the second is the P¹(O)< group in formula -I- or the COOM' group in formula -II- and the third and fourth can be independently selected from a H or a C atom; wherein the phosphorus atom P¹ carries four substituents whereby the first substituent is C¹, the second is the O atom and the third and fourth can be independently selected from H, a C group, an O group carrying one further substituent selected from a H or a C group, or a N group carrying two further substituents independently selected from a H or C group; with the limitation that only one substituent of the third and fourth substituent of P¹ can be a H group; wherein M' is represented by H or alkaline, earth alkaline, ammonium or protonated amine species;

(i) by reacting the compound containing an α-oxy carboxylic acid group with an activator by adding the activator to the compound containing an α-oxy carboxylic acid group whereby the equivalent ratio of α-oxy carboxylic acid functions -COOM' in the compound containing an α-oxy carboxylic acid group : activating functions in the activator is from 1 : 3 to 3 : 1, obtaining a compound containing an activated α-oxy carboxylic acid group, followed by adding to said compound a nucleophilic P component, wherein the phosphorus atom has the oxidation state +1 or +3, in an equivalent ratio of activated α-oxy carboxylic acid functions COL in the compound containing an activated α-oxy carboxylic acid group : nucleophilic P atoms in the nucleophilic P component of from 1 : 3 to 3 : 1; or
(ii) by adding the activator to a nucleophilic P component, wherein the phosphorus atom has the oxidation state +1 or +3, in an equivalent ratio of nucleophilic P atoms in the nucleophilic P component : activating functions in the activator of from 1 : 6 to 3 : 1, obtaining an activated P component, followed by adding the activated P component to the compound containing an α-oxy carboxylic acid group in an equivalent ratio of α-oxy carboxylic acid functions -COOM' in the compound containing an α-oxy carboxylic acid group : activated P atoms in the activated P component of from 1 : 3 to 3 : 1; or
(iii) by reacting a compound containing an activated α-oxy carboxylic acid group and obtained in accordance with the first step mentioned under (i) with the activated P component and obtained in accordance with the first step mentioned under (ii) whereby the equivalent ratio of activated P atoms in the activated P component : activated α-oxy carboxylic acid functions COL in the compound containing an activated α-oxy carboxylic acid group is from 1 : 3 to 3 : 1, by adding the activated P component to the compound containing an activated α-oxy carboxylic acid group;
whereby L is a good leaving group;
whereby the mode of addition can be reversed meaning that the compound containing an α-oxy carboxylic acid group or the nucleophilic P component is added to the activator, and the compound containing an α-oxy carboxylic acid group or the compound containing an activated α-oxy carboxylic acid group is added to the nucleophilic P component or the activated P component;
followed by adding water after completing the reaction and recovering the product formed.

The activator is selected from compounds containing activated functions that react in step (i) with the α-oxy carboxylic acid functions -COOM' of the compound containing an α-oxy carboxylic acid group obtaining the compounds containing an activated α-oxy carboxylic acid group which group is an activated carboxylic acid function -COL, and/or that react in step (ii) via their activated functions with >P-OH or >P(O)H functions of the nucleophilic P component obtaining an activated P component containing >P-L functions, and with a P(III)-O-P(III,V) moiety of the nucleophilic P component obtaining an activated P component containing two P(III)-L functions or one P(III)-L and one P(V)-L function. L has the meaning as stated below and is a good leaving group. A good leaving group in connection with the process of the invention is a molecular fragment that is suitable to depart with a pair of electrons in heterolytic bond cleavage leaving the activated carboxylic acid function -COL, and, respectively, the >P-L function and the P(III)-L function which happens in the following reaction step between the compound containing an activated α-oxy carboxylic acid group and the nucleophilic P component (step (i)), between the activated P component and the compound containing an α-oxy carboxylic acid group (step (ii)), and between the compound containing an activated α-oxy carboxylic acid group and the activated P component (step (iii)). Good leaving groups suitable for this process can be selected from those described in the literature and are well-known. L is preferably selected from -Cl, -Br, -I, -OSO₂R^{e}, -OC(O)R^{e}, with R^{e} being a C₁₋₃₀ hydrocarbon chain in branched, linear, cyclic, aromatic, heterocyclic or heteroaromatic configuration or a C₁₋₃₀ hydrocarbon chain in branched, linear or cyclic partially or fully substituted with F or Cl.

In more detail, this invention concerns a method for the manufacture of compounds containing an α-oxy phosphorus group selected from the formulae:

R³[-O-C(R¹)(R²)ₘ(P(O)R^{a}R^{b})₂₋ₘ]ₙ -III-

R³[-C(OR¹)(R²)ₘ(P(O)R^{a}R^{b})₂₋ₘ]ₙ -IV-

comprising the steps of:
reacting a compound containing an α-oxy-carboxylic acid group having a formulae selected from:

   R³[-(O-C(R¹)(R²)ₘ(COOM')₂₋ₘ]ₙ -V-

   R³[-C(OR¹)(R²)ₘ(COOM')₂₋ₘ]ₙ -VI-
either with an activator by adding the activator to the compound containing an α-oxy carboxylic acid group, in an equivalent ratio of α-oxy carboxylic acid functions COOM' in the compound containing an α-oxy carboxylic acid group : activating functions in the activator of from 1 : 3 to 3 : 1 at a temperature of from 10°C to 200°C for a total reaction time of from 1 minute to 7 days, followed by reacting the obtained compound containing an activated α-oxy carboxylic acid group with a nucleophilic P component,
wherein the phosphorus atom has the oxidation state +1 or +3, by adding the nucleophilic P component to the compound containing an activated α-oxy carboxylic acid group, in an equivalent ratio of activated α-oxy carboxylic acid functions COL in the compound containing an activated α-oxy carboxylic acid group : nucleophilic P atoms in the nucleophilic P component of from 1 : 3 to 3 : 1 at a temperature of from 10°C to 200°C for a total reaction time of from 1 minute to 7 days;
or with an activated P component, obtained by the reaction of a nucleophilic P component with an activator, by adding the activator to the nucleophilic P component, in an equivalent ratio of nucleophilic P atoms in the nucleophilic P component : activating functions in the activator from 1 : 6 to 3 : 1 at a temperature of from 10°C to 200°C for a total reaction time of from 1 minute to 7 days, by adding the activated P component to the compound containing an α-oxy carboxylic acid group, in an equivalent ratio of α-oxy carboxylic acid functions COOM' in the compound containing an α-oxy carboxylic acid group : activated P atoms in the activated P component of from 1 : 3 to 3 : 1 at a temperature of from 10°C to 200°C for a total reaction time of from 1 minute to 7 days;
or with an activator by adding the activator to the compound containing an α-oxy carboxylic acid group, in an equivalent ratio of α-oxy carboxylic acid functions COOM' in the compound containing an α-oxy carboxylic acid group : activating functions in the activator of from 1 : 3 to 3 : 1 at a temperature of from 10°C to 200°C for a total reaction time of from 1 minute to 7 days, followed by reacting the obtained compound containing an activated α-oxy carboxylic acid group with an activated P component, obtained by the reaction of a nucleophilic P component with an activator, by adding the activator to the nucleophilic P component, in an equivalent ratio of nucleophilic P atoms in the nucleophilic P component : activating functions in the activator from 1 : 6 to 3 : 1 at a temperature of from 10°C to 200°C for a total reaction time of from 1 minute to 7 days, in an equivalent ratio of activated P atoms in the activated P component : activated α-oxy carboxylic acid functions COL in the compound containing an activated α-oxy carboxylic acid group from 1 : 3 to 3 : 1, by adding the activated P component to the compound containing activated ⊐-oxy carboxylic acid functions at a temperature of from 10°C to 200°C for a total reaction time of from 1 minute to 7 days;
whereby the mode of addition can be reversed meaning that the compound containing an α-oxy carboxylic acid function or the nucleophilic P component is added to the activator, and the the compound containing an α-oxy carboxylic acid function or the compound containing an activated α-oxy carboxylic acid function is added to the nucleophilic P component or the activated P component;
followed by adding water after completing the reaction and recovering the product formed;
wherein the R^{a} and R^{b} groups are defined below if these groups are already present in the used nucleophilic P component, (see nucleophilic P component section), otherwise R^{a} and/or R^{b} are OM', or R^{a} is OM' and R^{b} is H; m can be 0 or 1; n is a selected integer from 1 to 100000; M' is represented by H or alkaline, earth alkaline, ammonium or protonated amine species;
R¹ and R² are independently selected from: H, hydrocarbon groups in branched, linear, cyclic, aromatic, heterocyclic or heteroaromatic configuration having from 1 to 100 carbon atoms; when R¹ in formulae -V- and -VI- contains an aromatic or heteroaromatic group, then there must be at least two alkylene carbon atoms between the aromatic or heteroaromatic group and the oxygen atom;
R³ is selected from hydrocarbon groups in branched, linear, cyclic or heterocyclic configuration having from 1 to 200000 carbon atoms, whereby [-O-C(R¹)(R²)ₘ(COOM')₂₋ₘ] in formula -V- and [-C(OR¹)(R²)ₘ(COOM')₂₋ₘ] in formula -VI-can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R³;
when n = 1, R³ can be H or Y-B[-O-A]ₓ- wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; Y is selected from hydrocarbon groups in branched, linear, cyclic, heterocyclic, aromatic or heteroaromatic configuration having from 1 to 100 carbon atoms; when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, -COZ, -O-COZ, -OR, -NR₂, - SiR'₃, -Si(OR')₃, -B(OR')₂, -P⁺R'₃, -N⁺R₃, -CN, halogen, -P(O)_{z}Z₂, -NR-COZ, -N(COR')₂, - NR-CSZ, -NR-C(NR)NR₂, -CSZ, -O-CSZ, -NR-SO₂R', -SO_{y}Z, -O-SO_{y}Z; wherein z is 0 or 1; wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 100 carbon atoms; R' is independently selected from hydrocarbon groups in branched, linear, cyclic, heterocyclic, aromatic or heteroaromatic configuration having from 1 to 100 carbon atoms; if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms, if R and R' are connected to different atoms, or 2 to 100 carbon atoms, if R and R' are connected to the same atom; B can also be a direct bond when Y is H or a hydrocarbon group in branched, linear, cyclic, heterocyclic, aromatic or heteroaromatic configuration having from 1 to 100 carbon atoms;
when n is 1, R³ can be connected to R¹ and be a direct bond, while R¹ is C₁₋₁₀ alkylene group in linear configuration;
when m is 1, R¹ and R² can also be connected, with R² being a direct bond and R¹ being a C₂₋₁₂ linear alkylene group.

Preferably n is a selected integer from 1 to 15000;

preferably R¹ and R² are independently selected from: H, hydrocarbon groups in branched, linear, cyclic, aromatic, heterocyclic or heteroaromatic configuration having from 1 to 20 carbon atoms;
preferably R³ is selected from hydrocarbon groups in branched, linear, cyclic or heterocyclic configuration having from 1 to 30000 carbon atoms; when n = 1, R³ can be H or Y-B[-O-A]ₓ- wherein A is selected from linear and branched hydrocarbons having preferably from 2 to 10 carbon atoms and B is selected from hydrocarbon groups in branched, linear, cyclic, heterocyclic, aromatic or heteroaromatic configuration having from 1 to 50 carbon atoms; wherein Y can represent: H, an unsubstituted or substituted double bond, an unsubstituted or substituted triple bond, -COZ, -O-COZ, -OR, -NR₂, - SiR'₃, -Si(OR')₃, -B(OR')₂, -P⁺R'₃, -N⁺R₃, -CN, halogen, -P(O)_{z}Z₂, -NR-COZ, -N(COR')₂, - NR-CSZ, -NR-C(NR)NR₂, -CSZ, -O-CSZ, -SO_{y}Z, -O-SO_{y}Z, -NR-SO₂R'; wherein z is 0 or 1; wherein y is 0, 1 or 2; wherein Z is H, R, -OR, -NH₂,-NR2_{,} and -NHR wherein R is independently selected from H, hydrocarbon groups in branched, linear, cyclic, heterocyclic, aromatic or heteroaromatic configuration having from 1 to 20 carbon atoms; R' is independently selected from hydrocarbon groups in branched, linear, cyclic, heterocyclic, aromatic or heteroaromatic configuration having from 1 to 20 carbon atoms; if at least two R or R' groups are present in the functional group then these groups can be connected whereby one R or R' group is a direct bond and the other is a hydrocarbon group in branched, linear, cyclic, heterocyclic, aromatic or heteroaromatic configuration having from 1 to 20 carbon atoms, if R and R' are connected to different atoms, or 2 to 20 carbon atoms, if R and R' are connected to the same atom; wherein x is preferably 0-30.

More preferred n is a selected integer from 1 to 5000;
more preferred R¹ and R² are independently selected from: H, hydrocarbon groups in branched, linear, cyclic, aromatic, heterocyclic or heteroaromatic configuration having from 1 to 10 carbon atoms;
more preferred R³ is selected from hydrocarbon groups in branched, linear, cyclic or heterocyclic configuration having from 1 to 10000 carbon atoms;
when n = 1, R³ can be H or Y-B[-O-A]ₓ- wherein x is 0-20; wherein A is selected from linear and branched hydrocarbons having more preferred from 2 to 6 carbon atoms and B is selected from hydrocarbon groups in branched, linear, cyclic, heterocyclic, aromatic or heteroaromatic configuration having from 1 to 50 carbon atoms; Y is selected from hydrocarbon groups in branched, linear, cyclic, heterocyclic, aromatic or heteroaromatic configuration having from 1 to 50 carbon atoms; wherein Y can represent: H, an unsubstituted or substituted double bond, an unsubstituted or substituted triple bond, -COZ, -OR, -NR₂, -CN, -Cl, -Br, -I, -O-SO_{y}Z, -N(COR')₂; wherein y is 0, 1 or 2; wherein Z is H, R, -OR, -NH₂, -NR₂, and -NHR wherein R is independently selected from H, hydrocarbon groups in branched, linear, cyclic, heterocyclic, aromatic or heteroaromatic configuration having from 1 to 10 carbon atoms, R' is independently selected from hydrocarbon groups in branched, linear, cyclic, heterocyclic, aromatic or heteroaromatic configuration having from 1 to 10 carbon atoms; if at least two R or R' groups are present in the functional group then these can be connected whereby one R or R' group is a direct bond and the other is a hydrocarbon group in branched, linear, cyclic, heterocyclic, aromatic or heteroaromatic configuration having from 1 to 10 carbon atoms, if R and R' are connected to different atoms, or 2 to 10 carbon atoms, if R and R' are connected to the same atom; B can also be a direct bond when Y is H or a hydrocarbon group in branched, linear, cyclic, heterocyclic, aromatic or heteroaromatic configuration having from 1 to 50 carbon atoms;
when n is 1, R³ can be connected to R¹ and be a direct bond, while R¹ is C₁₋₈ alkylene group in linear configuration;
when m is 1, R¹ and R² can also be connected, with R² being a direct bond and R¹ being a C₂₋₈ linear alkylene group.

Most preferred α-oxy carboxylic acids herein are:
glycolic acid;
diglycolic acid;
methoxyacetic acid;
3,6,9-trioxadecanoic acid;
3,6-dioxadodecyloic acid;
5-phthalimido-3-oxapentanoic acid;
2-tetrahydrofuroic acid.

The nucleophilic P component wherein the phosphorus atom has the oxidation state +1 or +3 can be selected from the following classes:
Class 1: H₃PO₃, H₃PO₂, H₄P₂O₅, H₄P₂O₆;
Class 2: R^{a}R^{b}P(O)H, R^{a}PO₂H₂;
Class 3: PX₃, R^{a}PX₂, R^{a}R^{b}PX;
Class 4: P₄Oₙ with n = 6-9;
Class 5: R^{a}R^{b}R^{c}P;
wherein X is selected from Cl or Br; wherein R^{a} and R^{b} are independently selected from: a C₁₋₂₀ hydrocarbon chain in branched, linear, cyclic, aromatic, heterocyclic or heteroaromatic configuration, a silyl group independently substituted by C₁₋₂₀ hydrocarbon groups in branched, linear, cyclic, aromatic, heterocyclic or heteroaromatic configuration, OR" or N(R"')₂, wherein R" can be selected from a C₁₋₂₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R'" can be independently selected from H, a C₁₋₂₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration; if R^{a} or R^{b} is a N(R"')₂ group, then the two R'" groups can be connected together with one R'" group being a C₂₋₂₀ hydrocarbon chain in branched, linear, cyclic, aromatic, heterocyclic or heteroaromatic configuration and the other R'" being a direct bond; R^{a} and R^{b} can be connected, then R^{a} is a C₂₋₂₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁₋₂₀ hydrocarbon chain in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁₋₂₀ hydrocarbon chain in branched, linear, cyclic, aromatic, heterocyclic or heteroaromatic configuration and one R'" of the second N(R"')₂ group is a direct bond to this R'" group of the first N(R"')₂ group; wherein R^{c} is OR".

The nucleophilic P component can be represented by P₄O₆ a substantially pure compound containing at least 85 %; preferably more than 90 %; more preferably at least 95 % and in one particular execution at least 97 % of P₄O₆. While tetraphosphorus hexa oxide, suitable for use within the context of this invention, can be manufactured by any suitable technology, in preferred executions the hexa oxide can be prepared in accordance with the process disclosed in WO 2009/068636 and/or EP 08 168 898.8, entitled "Process for the manufacture of P₄O₆ with improved yield". In detail, oxygen, or a mixture of oxygen and inert gas, and gaseous or liquid phosphorus are reacted in essentially stoichiometric amounts in a reaction unit at a temperature in the range from 1600 to 2000 K, by removing the heat created by the exothermic reaction of phosphorus and oxygen, while maintaining a preferred residence time of from 0.5 to 60 seconds followed by quenching the reaction product at a temperature below 700 K and refining the crude reaction product by distillation. The hexa oxide so prepared is a pure product containing usually at least 97 % of the oxide. The P₄O₆ so produced is generally represented by a material of high purity containing in particular low levels of elementary phosphorus, P₄, preferably below 1000 ppm, expressed in relation to the P₄O₆ being 100%. The preferred residence time is from 5 to 30 seconds, more preferably from 8 to 30 seconds. The reaction product can, in one preferred execution, be quenched to a temperature below 350 K. The term "liquid P₄O₆" embraces any state of the P₄O₆.

Preferably the nucleophilic P component wherein the phosphorus atom has the oxidation state +1 or +3 can be selected from the following classes:
Class 1: H₃PO₃, H₃PO₂;
Class 2: R^{a}R^{b}P(O)H, R^{a}PO₂H₂;
Class 3: PCl₃, R^{a}PCl₂, R^{a}R^{b}PCl, PBr₃;
Class 4: P₄O_{6;}
Class 5: R^{a}R^{b}R^{c}P;
wherein R^{a} and R^{b} are independently selected from: a C₁₋₁₀ hydrocarbon chain in branched, linear, cyclic, aromatic, heterocyclic or heteroaromatic configuration, a silyl group independently substituted by C₁₋₁₀ hydrocarbon groups in branched, linear, cyclic, aromatic, heterocyclic or heteroaromatic configuration, OR" or N(R"')₂, wherein R" can be selected from a C₁₋₁₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R"' can be independently selected from H, a C₁-₁₀ hydrocarbon chain in branched, linear, cyclic, aromatic, heterocyclic or heteroaromatic configuration, or a silyl group independently substituted by C₁₋₁₀ hydrocarbon groups in branched, linear, cyclic, aromatic, heterocyclic or heteroaromatic configuration; if R^{a} or R^{b} is a N(R"')₂ group, then the two R'" groups can be connected together with one R'" group being a C₂₋₁₀ hydrocarbon chain in branched, linear, cyclic, aromatic, heterocyclic or heteroaromatic configuration and the other R'" being a direct bond; R^{a} and R^{b} can be connected, then R^{a} is a C₂₋₁₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁₋₁₀ hydrocarbon chain in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁₋₁₀ hydrocarbon chain in branched, linear, cyclic, aromatic, heterocyclic or heteroaromatic configuration and one R'" of the second N(R"')₂ group is a direct bond to this R'" group of the first N(R"')₂ group; wherein R^{c} is OR".

Most preferred nucleophilic P components are: P₄O₆, PCl₃, H₃PO₃, (MeO)₂P(O)H, PhPO₂H₂, H₃PO₂, (MeO)₃P.

The third and/or the fourth substituent of P¹ in formula -I- and the groups R^{a} and/or R^{b} in formulae -III- and -IV- are introduced by the utilised nucleophilic P component as a result of the conversion. However, some nucleophilic P components do not contain the groups R^{a} and/or R^{b}, but are used for the conversion of the compound containing an ⊐-oxy carboxylic acid function to the corresponding compounds containing an α-oxy phosphorus group described by formulae -I-, -III- or -IV-. Such nucleophilic P components are for examples P₄O₆ and H₃PO₃. In such a case the third and/or the fourth substituent of P¹ in formula -I- or R^{a} and/or R^{b} in formulae -III- or -IV- are OM' with M' being H or alkaline, earth alkaline, ammonium or protonated amine species or if H₃PO₂ is used then R^{a} is OM' and R^{b} is H and if R^{a}PO₂H₂ is used then R^{b} is OM'.

In selected cases the obtained ⊐-oxy phosphorus derivative described by formula -I-,-III**-** or -IV- can react a second time. This is the case when the phosphorus atom in the ⊐-oxy phosphorus derivative still possesses a lone pair. Such behaviour was observed for example in the reaction of methoxyacetic acid activated by trifluoroacetic anhydride with H₃PO₂ as the nucleophilic P component. The reaction products are the desired methoxymethylphosphinic acid and bis(methoxymethyl)phosphinic acid obtained by reaction of methoxymethylphosphinic acid with a second activated methoxyacetic acid.

The activator is selected from compounds containing activated functions that react with the α-oxy carboxylic acid functions -COOM' of the compound containing an α-oxy carboxylic acid group obtaining the compounds containing an activated α-oxy carboxylic acid group -COL, and/or that react via their activated functions with >P-OH or >P(O)H functions of the nucleophilic P component obtaining an activated P component containing >P-L functions, and with a P(III)-O-P(III,V) moiety of the nucleophilic P component obtaining an activated P component containing two P(III)-L functions or one P(III)-L and one P(V)-L function. L has the meaning as stated below and is a good leaving group.

The activator can preferably be selected from the following classes:
- Class A:: organic and inorganic acid anhydrides of acids like carboxylic acids R^{e}C(O)-O-(O)CR^{e}, sulfonic acids R^{e}SO₂-O-SO₂R^{e}, phosphonic acids R^{e}P(O)(OH)-O-(HO)(O)PR^{e} and [R^{e}PO₂]₃, e.g. like trifluoroacetic anhydride, acetic anhydride, pivalic anhydride, phthalic anhydride, succinic anhydride, methanesulfonic anhydride, p-toluenesulfonic anhydride, trifluoromethanesulfonic anhydride, P₄O₁₀, metaphosphoric acid, polyphosphoric acid;
- Class B:: organic and inorganic acid halides of acids like carboxylic acids R^{e}C(O)Cl, sulfonic acids R^{e}-SO₂Cl like e.g. methanesulfonyl chloride, p-toluenesulfonyl chloride, 2,2,2-trifluoroethanesulfonyl chloride, ethanesulfonyl chloride, trifluoromethanesulfonyl chloride, OPCl₃, PCl₅, SOCl₂, C₂O₂Cl₂ (oxalyl chloride), C₃N₃Cl₃ (cyanuric chloride), SOBr₂, PBr₃, BBr₃;
- Class C:: carbonate derivatives R^{e}O-C(O)-O-C(O)-OR^{e}, Cl-C(O)-OR^{e} and R^{f}C(O)R^{f}, like e.g. di-tert. butyl dicarbonate, N,N'-disuccinimidyl carbonate, bis(pentafluorophenyl) carbonate, ethyl chloroformate, 4-nitrophenyl chloroformate, carbonyldiimidazole;
- Class D:: carbodiimides R^{e}-N=C=N-R^{e} like e.g. N,N'-dicyclohexylcarbodiimide, N,N'-diisopropylcarbodiimide;
wherein R^{e} is a C₁₋₂₀ hydrocarbon chain in branched, linear, cyclic, aromatic, heterocyclic or heteroaromatic configuration or a C₁₋₂₀ hydrocarbon chain in branched, linear or cyclic partially or fully substituted with F or Cl; wherein R^{f} is a is C₁₋₂₀ hydrocarbon chain in heterocyclic or heteroaromatic configuration containing at least one nitrogen atom that is bound to the central carbonyl carbon atom in R^{f}C(O)R^{f}.

Most preferred activators are: P₄O₁₀, SOCl₂, C₂O₂Cl₂, trifluoroacetic anhydride, acetic anhydride, methanesulfonic anhydride, trifluoromethanesulfonic anhydride, carbonyl diimidazole, N,N'-dicyclohexylcarbodiimide.

The use of R^{e}C(O)Cl, R^{e}-SO₂Cl or Cl-C(O)-OR^{e} might require the presence of a base like for example an amine, alcoholate or lithium organyl. Some of these activators can also be used as heterogeneous reagents, a commercially available product is e.g. polymer-bound N-benzyl-N'-cyclohexylcarbodiimide (available from Sigma-Aldrich, No. 561843).

The activated P component is obtained by reacting selected nucleophilic P components with selected activators. The following combinations are possible:
Class 1 with Class A, B, C, D;
Class 2 with Class A, B, C, D;
Class 4 with Class A;
Class 3 and 5 will only be used as the nucleophilic P component and not as an activated P component.

Excluded are combinations of nucleophilic P components with activators that will lead to the formation of P(III)-O-P(III,V) bonds like e.g. the combination of compounds of class 1 or 2 with P₄O₁₀, metaphosphoric acid or polyphosphoric acid.

In some cases the aforementioned conversion of the compound containing an α-oxy carboxylic acid group does not lead to the expected corresponding compound containing an α-oxy phosphorus group, but to another compound containing an α-oxy phosphorus group specified by one of the formulae -I-, -III- and -IV-. In these cases, the compound containing an α-oxy carboxylic acid group contains a labile function or group that is cleaved under the applied reaction conditions, but nevertheless allows the desired conversion to a compound containing an α-oxy phosphorus group. An example for such a conversion is the reaction of diglycolic acid specified by formula -I- with P₄O₆ yielding after quenching with water besides the desired phosphonate also hydroxymethylphosphonic acid specified by formula -I- (c.f. Example 21). When halogen containing nucleophilic P components like e.g. PCl₃ are used, the presence of the released HCl in the reaction mixture can lead to degradation of the substrate if e.g. ether bonds are present.

In preferred aspects of the invention herein, the nucleophilic P component or the activated P component is added to a solution of the compound containing an α-oxy carboxylic acid group or compound containing an activated α-oxy carboxylic acid group. The compound containing an α-oxy carboxylic acid group or compound containing an activated α-oxy carboxylic acid group can also be added to the nucleophilic P component or the activated P component, i.e. a reverse addition, which is another preferred aspect of this invention. Whatever the order of addition is, an adjuvant and/or solvent can be added in combination with the nucleophilic P component, with the compound containing an α-oxy carboxylic acid group, with the activator or all components. The adjuvant/solvent can be added to the reaction mixture after addition of all the reagents or to the individual reaction partners before initiating the addition of the individual partners and any combination thereof.

The adjuvant is selected from the group of:
- Broensted acids;
- Lewis acids; and
- combinations thereof

While the adjuvants were found to beneficially mitigate/enhance the claimed method, in particular the one step formation of selected high purity compounds containing an a-oxy phosphorus group, the mechanism by virtue of which the adjuvants interfere is not well understood. In any event the essential parameters are required to generate the, by any standard, unusually beneficial results. Irrespective of the foregoing it was found that superior results can also be secured from using a mixture of the compound containing an α-oxy carboxylic acid group and the nucleophilic P component without the use of any adjuvant or solvent.

One adjuvant class are homogeneous or heterogeneous Broensted acids which can e.g. be sulfonic, carboxylic or inorganic acids. The sulfonic acid compound is selected from homogeneous and heterogeneous sulfonic and polysulfonic acids. Suitable homogeneous sulfonic acids have the formula:

(R*-(S0₃H)ₓ)

wherein R* can be selected from C₁₋₂₄ hydrocarbon groups of linear, branched, cyclic or polycyclic configuration, possibly substituted by F and/or CF₃ groups, where x is 1 to 4, or C₆₋₁₄ aromatic or alkyl aromatic groups wherein the alkyl group can be C₆₋₂₀ where x is 1 to 3 for monoaromatic systems and 1 to 4 for diaromatic and higher aromatic systems. R* can also be represented by diphenylether or diphenylmethane or by C₆₋₂₀ alkyl diphenylmethane or C₆₋₂₀ alkyl diphenylether with x equal to 1 to 2.

Preferred heterogeneous sulfonic acids can be represented by species of discretionary selected subclasses as follows:
(1) sulfonic acids grafted onto resins comprising copolymers of styrene, ethylvinyl benzene and divinyl benzene functionalized so as to graft SO₃H groups onto the aromatic groups can be used. These acidic resins can be used in different physical configurations such as in gel form, in a macro-reticulated configuration or supported onto a carrier material such as silica or carbon or carbon nanotubes. A known example of such resins is AMBERLYST 15 from Rohm and Haas. Other types of resins include perfluorinated resins carrying sulfonic acid groups. The fluorinated resins can be used as such or supported onto an inert material like silica or carbon or carbon nanotubes entrapped in a highly dispersed network of metal oxides and/or silica. NAFION is an example of such fluorinated resins. NAFION is a Trade Mark of the Du Pont Company. AMBERLYST 15 is a Trade Mark of the Rohm and Haas Company.
(2) sulfonic acids deposited on solids, having a lone pair of electrons, like silica, silica-alumina combinations, alumina, zeolites, silica, activated charcoal, sand and/or silica gel can be used as support for sulfonic acids, like methane sulfonic acid or paratoluene sulfonic acid. Solids, like zeolites, silica, or mesoporous silica e.g. MCM-41 or-48, or polymers like e.g. polysiloxanes can be functionalized by chemical grafting to thus yield sulfonic acid groups or precursors therefore. The functionalization can be introduced in various ways by direct grafting on the solid by e.g. reaction of the SiOH groups of the silica with chlorosulfonic acid; or can be attached to the solid by means of organic spacers which can be e.g. a perfluoro alkyl silane derivative. Sulfonic acid functionalized silica can also be prepared via a sol gel process, leading to e.g. a thiol functionalized silica, by co-condensation of Si(OR')₄ and e.g. 3-mercaptopropyl-tri-methoxy silane using either neutral or ionic templating methods with subsequent oxidation of the thiol to the corresponding sulfonic acid by e.g. H₂O₂. The functionalized solids can be used as is, i.e. in powder form, in the form of a zeolitic membrane, or in many other ways like in admixture with other polymers in membranes or in the form of solid extrudates or in a coating of e.g. a structural inorganic support e.g. monoliths of cordierite.

Homogeneous sulfonic acids are adapted to form a single liquid phase within the reaction medium under the reaction conditions. It is understood that the sulfonic acids which are insoluble in the reaction medium, and thus non-homogeneous, at ambient conditions e.g. 20 °C, can become soluble at e.g. the reaction temperature and thus qualify as "homogeneous". The sulfonic acid may be recovered from the reaction medium by known techniques such as e.g. filtration of insoluble acids, or by other techniques routinely available such as ion exchange, nanofiltration or electrodialysis. The homogeneous nature of a sulfonic acid can be ascertained routinely by e.g. visible inspection of precipitation or phase separation properties.

The term heterogeneous means, that the sulfonic acid is substantially insoluble in the reaction medium at the reaction conditions. The insoluble nature of the acid can be ascertained routinely e.g. based on visible observation.

The sulfonic acid is not, and cannot be equated to, a reactant in the context of the claimed technology. Actually, the sulfonic acid is, in fine, not chemically altered as a result of the claimed method although it may well be, probably is, that the sulfonic acid interferes in the formation of reaction intermediates.

Suitable homogeneous sulfonic acids can be solid at ambient temperature and shall preferably be used in combination with organic solvents which are inert in relation to the essential reaction partners. Suitable solvents are listed in the passage below.

Preferred homogeneous and heterogeneous sulfonic acids are:
methanesulfonic acid;
trifluoromethanesulfonic acid;
Resin carrying sulfonic acid groups e.g. Amberlyst 15;
Nafion NR50; and
Nafion SAC-13.

The carboxylic acid compound is selected from homogeneous and heterogeneous carboxylic and polycarboxylic acids. Suitable homogeneous carboxylic acids have the formula:

(R**-(CO₂H)ₓ)

wherein R** can be selected from C₁₋₂₄ hydrocarbon groups of linear, branched, cyclic or polycyclic configuration, possibly substituted by F, Cl, Br, I and/or CF₃ groups, R** can be selected from perfluoro polyalkoxy hydrocarbon chain where x is 1 to 4, or C₆₋₁₄ aromatic or alkyl aromatic groups wherein the alkyl group can be C₆₋₂₀ where x is 1 to 3 for monoaromatic systems and 1 to 4 for diaromatic and higher systems. R** can also be represented by diphenylether or diphenylmethane or by C₆₋₂₀ alkyl diphenylmethane or C₆₋₂₀ alkyl diphenylether with x is 1 to 2.

Suitable homogeneous carboxylic acids can be solid at ambient temperature and shall, in preferred executions be used in combination with organic solvents which are inert in relation to the essential reaction partners. Suitable solvents are listed in the passage below. Preferred carboxylic acids are trifluoroacetic acid and perfluoroundecanoic acid.

The carboxylic acid is not, and cannot be equated to, a reactant in the context of the claimed technology. Actually, the carboxylic acid is, in fine, not chemically altered as a result of the claimed method although it may well be, probably is, that the carboxylic acid interferes in the formation of reaction intermediates.

The inorganic acid compound is selected from homogeneous and heterogeneous inorganic acids. Suitable homogeneous inorganic acids are selected from:
H₃PO₃, H₃PO₄, polyphosphoric acid, metaphosphoric acid, phosphonic acid derivatives R'P(O)(OH)₂.

Heterogeneous inorganic acids can be represented by acidic metal oxide combinations which can be supported onto usual carrier materials such as silica, carbon, silica-alumina combinations or alumina. These metal oxide combinations can be used as such or with inorganic or organic acid doping. Suitable examples of this class of adjuvants are amorphous silica-alumina, acid clays, such as smectites, inorganic or organic acid treated clays, pillared clays, zeolites, usually in their protic form, and metal oxides such as ZrO₂-TiO₂ in about 1 : 1 molar combination and sulphated metal oxides e.g. sulphated ZrO₂. Other suitable examples of metal oxide combinations, expressed in molar ratios, are TiO₂-SiO₂ 1 : 1 ratio; and ZrO₂-SiO₂ 1 : 1 ratio. A preferred inorganic acid is Montmorillonite K-10. Another class of suitable heterogeneous Broensted acids is represented by resin bound phosphonic acids e.g. aminomethylene-phosphonic acid attached by a variable link to macro porous polystyrene matrix e.g. QuadraPure™ AMPA from Reaxa, or inorganic bound phosphonic acids e.g. phosphonic acid attached by a variable link to an inorganic support like silica e.g. POH1 from PhosphonicS.

The number of equivalents of Broensted acid functions in the sulfonic, carboxylic and inorganic acids can be readily and routinely ascertained. As an example, the Broensted acidity can be determined by a simple acid base titration or by adding a known amount of a base and titration of the excess of the base, which has not been neutralized by the acid functions. For thermally stable heterogeneous sulfonic acids and heterogeneous inorganic acids the number of acid equivalents can be determined e.g. by thermal desorption of isopropylamine followed by using a micro-balance in accordance with the method of R.J. Gorte et al., J. Catal. , 129, 88, (1991) and 138, 714, (1992).

The Lewis acid is selected from homogeneous and heterogeneous Lewis acids. Suitable homogeneous Lewis acids can be selected from metal salts having the general formula:

MXₙ

wherein M represents a transition metal or main group element like Li, B, Mg, Al, Bi, Fe, Zn, or Pd; X in MXₙ is typically an anion of an acid or acid derivative like Cl, OTf or NTf₂, where Tf stands for CF₃SO₂-; and n is equal to the oxidation state of M, which can be from 1 to 5. Possible combinations are e.g. LiNTf₂; Mg(OTf)₂; MgCl₂; ZnCl₂; PdCl₂; Fe(OTf)₃; Al(OTf)₃; AlCl₃; Bi(OTf)₃; BiCl₃. Preferably, combinations of a hard metal or a metal on the borderline between hard and soft according to the HSAB (hard soft acid base) concept like Li, Mg, Al, Sc, Zn, Bi, and weakly coordinating anions like OTf or NTf₂ are used. Examples of such preferred combinations are: LiNTf₂; Mg(OTf)₂; Al(OTf)₃; Bi(OTf)₃.

The metal salt is typically dissolved in a donor solvent like acetonitrile or 1,2-dimethoxyethane to solvate the cation. Discrete complexes of such solvated metal cations like [Cu(CN)₄]OTf can be employed as well. Moreover, the combination of such metal salts with a coordinating ligand or discrete complexes can be employed. Examples of such combinations are Fe(OTf)₃ and N,N,N',N'-tetramethylethylenediamine or Mg(OTf)₂ and 15-crown-5, wherein 15-crown-5 stands for 1,4,7,10,13-pentaoxacyclopentadecane. An example for a discrete metal complex is represented by (Ph₃P)₂PdCl₂.

Another class of Lewis acids is represented by compounds containing main group elements in which the main group element represents the Lewis acid site, e.g. B(C₆F₅)₃ or Me₃SiOTf.

Yet another class of preferred Lewis Acids are organometallic species like Cp*Ru(MeCN)₃PF₆, wherein Cp* stands for pentamethylcyclopentadienyl.

Preferred heterogeneous Lewis acids can be represented by species of discretionary selected subclasses created by interaction/bonding of homogeneous Lewis acids e.g. metal complexes, metal salts or organometallic species with polymeric organic or inorganic backbones. An example of such subclass is a polystyrene matrix with bonded Sc(OTf)₂ groups. Such an adjuvant can be prepared e.g. by interaction of a polystyrene sulfonic acid resin e.g. Amberlyst 15 with Sc(OTf)₃. The number of equivalents of Lewis acid functions can be determined in this case by different ways e.g. by acid base determination of the unreacted sulfonic acid groups, by quantitative determination of the liberated triflic acid and by ICP measurement of the amount of Sc on the resin.

Solvents generally do not procure any benefits to the conversion of the α-oxy carboxylic acid to the corresponding α-oxy phosphorus group as compared to the same reaction conducted in the absence of solvents and adjuvants.

The Broensted acids, Lewis acids and the activator can, as recited above, be used together with a solvent or a mixture of solvents. Generally solvents inert to the reagents can be used. The solvent does not react (to any substantial degree) with the reagents involved in the reaction. Typical examples of suitable solvents are as follows: sulfolane, anisole; fluorobenzene; chlorinated and fluorinated hydrocarbons such as chlorobenzene, tetrachloroethane, tetrachloroethylene, dichloroethane, dichloromethane; polar solvents like diglyme, glyme, diphenyloxide, polyalkylene glycol derivatives with capped OH groups such as OR*** where R*** is a low alkyl or acyl group, aliphatic hydrocarbons such as hexane, heptane, cyclohexane; non-cyclic ethers like dibutyl ether, diethyl ether, diisopropyl ether, dipentylether, and butylmethylether cyclic ethers like tetrahydrofuran, dioxane, and tetrahydropyran; mixed cyclic/non-cyclic ethers like cyclopentylmethylether; aromatic solvents like toluene, benzene, xylene; organic acetates like ethylacetate: organic nitriles like acetonitrile, benzonitrile; silicon fluids like polymethylphenyl siloxane or mixtures thereof; ionic liquids like 1-n-butyl-imidazolium trifluoromethanesulfonate, and 1-ethyl-3-methyl-imidazolium bis(trifluoromethanesulfonyl)imide. Preferred solvents are 1,4-dioxane, 1,2-dimethoxyethane, cylopentylmethylether, ethylacetate, acetonitrile, chlorobenzene, toluene, dichloromethane, 1-ethyl-3-methyl-1,3-imidazolium bis(trifluoromethylsulfonyl)imide, 1-n-butyl-1,3-imidazolium triflate, or mixtures thereof.

When using solid Broensted or Lewis acids, it is preferable to use polar solvents capable of solubilizing the reagents and at least in part the products formed. Suitable solvents shall be used in a ratio of the number of equivalents of α-oxy carboxylic acid functions in the compound containing an α-oxy carboxylic acid group to the number of moles of solvent of from 1 : 0.1 to 1 : 100, preferably 1 : 1 to 1 : 80. These solvents can also be used for preparing a solution of either the nucleophilic P component or the compound containing an α-oxy carboxylic acid group utilised in the reaction. Of course, in addition to these solvents, the liquid Broensted and Lewis acids or solid Broensted or Lewis acids, or the liquid or solid activator dissolved or dispersed in a solvent e.g. as described above, can be used together with the other reactants in the sequence recited in the claims.

The reactions in accordance with this invention are conducted in a manner routinely known in the domain of the technology. The equivalent ratio between the adjuvants selected from Broensted or Lewis acid referred to the α-oxy carboxylic acid functions COOM' in the compound containing an α-oxy carboxylic acid group can be in the range of 0.01 : 1 to 20 : 1. As illustrated in the experimental showing, the method can be conducted, in one preference, by combining the reaction partners at 25 to 90°C. If required the reaction mixture can be heated to a temperature usually within the range between 30 and 130°C. The duration of the reaction at the selected temperatures is from 1 minute to 7 days. The upper temperature aims at preventing any substantial undesirable decomposition of the reactants, adjuvants, solvents or of the intermediates and products formed in these reactions. It is understood and well known, that the decomposition temperature of the partners or solvents can vary depending on physical parameters such as pressure and the qualitative and quantitative parameters of the ingredients in the reaction mixture. The reaction can be conducted at ambient pressure. The duration of the reaction can vary from virtually instantaneous, e.g. 1 minute, to a preferred period of time from e.g. 1 hour to 60 hours. This duration can include the gradual addition of the reactants.

The equivalent ratio of α-oxy carboxylic acid functions COOM' in the compound containing an α-oxy carboxylic acid group : activating functions in the activator can be selected from 1 : 3 to 3 : 1 and the equivalent ratio of nucleophilic P atoms in the nucleophilic P component : activating functions in the activator from 1 : 6 to 3 : 1. In both cases of activation the activator can be added to the compound containing an α-oxy carboxylic acid group or the nucleophilic P component or the reverse by adding the compound containing an α-oxy carboxylic acid group or the nucleophilic P component to the activator. Regardless of the mode of addition the reaction can be carried out at between 10°C to 200°C for a total reaction time of from 1 minute to 7 days. The activator, the compound containing an α-oxy carboxylic acid group or the nucleophilic P component can be dissolved in a solvent. In selected cases an adjuvant is added to the reaction mixture.

A minimum amount of water to be added after completed conversion of the compound containing an α-oxy carboxylic acid group and the nucleophilic P component in the presence of an activator is required to produce the final product. This minimum amount can be calculated as follows: for the conversion of one α-oxy carboxylic acid function in the compound containing an α-oxy carboxylic acid group one activating function of the activator is required, regardless of the mode of activation, i.e. either activating the compound containing an α-oxy carboxylic acid group and/or the nucleophilic P component. The minimum amount of water to be added can be calculated as the sum of the residual activating functions of the activator and the total number of P-Cl and P-O-P bonds in the reaction mixture.

The reaction product formed can be recovered in an appropriate manner. The reaction product can, for example, be isolated with the aid of known technologies from the crude reaction mixture. Adjuvants of heterogeneous nature can be removed by filtration from the crude reaction mixture. Moreover, volatile adjuvants can be removed by distillation from the crude reaction mixture, possibly with the aid of a co-solvent forming an azeotrope with the adjuvant. The utilised co-solvent can be present from the beginning or later on added to the reaction mixture. In another approach, the product can be recovered from the reaction mixture by extraction with a solvent insoluble in the adjuvant used, e.g. from a water insoluble adjuvant by extraction with water or e.g. from an aqueous mixture by the aid of a water immiscible organic solvent. Separation can be achieved by crystallisation or precipitation by addition of a suitable co-solvent/diluent. The precipitated material can be separated e.g. by filtration or centrifugation and further crystallized to meet desired purities. In another approach, the final product can be recovered as a fully or partially neutralised salt. Suitable salts preferentially include alkaline and earth alkaline metals cations. The final salt products can be routinely isolated and purified e.g. by re-crystallisation to thus yield the purified salt, possibly as a hydrate or solvate. Alternatively, the salts and their hydrates can be prepared from the isolated compounds containing an α-oxy phosphorus group. The reaction product can be isolated and purified by distillation ensuring no substantial decomposition during this process. The isolation and purification of the reaction products formed require the use of routine measures well known to the notional artisan, such as treatment with activated carbon to remove potential residual traces of sulphur containing compounds.

During the conversion of the compound containing an α-oxy carboxylic acid group into the corresponding compound containing an α-oxy phosphorus group, one equivalent of CO will be formed for each equivalent of α-oxy carboxylic acid function converted into the α-oxy phosphorus group. CO will leave the reaction mixture possibly contaminated with hydrogen chloride or hydrogen bromide. After purification by established procedures the CO can be used in many applications like e.g. as a fuel; in combination with hydrogen for methanol and Fischer-Tropsch hydrocarbons manufacture; for hydroformylation reactions; for alcohol carbonylation, e.g. carbonylation of methanol to acetic acid; or the conversion of methylacetate to acetic anhydride.

It is a further subject of the invention to provide a method for the manufacture of compounds containing
an α-oxy phosphorus group having the formula -O¹-C¹-P¹(O)< as described above, starting with the step of reacting a compound containing an activated ⊐O)< as described above, starting with the step

-O¹-C¹-COL -VII-

wherein L is selected from -Cl, -Br, -I, -OSO₂R^{e}, -OC(O)R^{e} with R^{e} being a C₁₋₃₀ hydrocarbon chain in branched, linear, cyclic, aromatic, heterocyclic or heteroaromatic configuration or a C₁₋₃₀ hydrocarbon chain in branched, linear or cyclic partially or fully substituted with F or Cl; and obtainable in accordance with the first step mentioned under (i) above,
with a nucleophilic P component, wherein the phosphorus atom has the oxidation state +1 or +3, by adding the compound containing an activated α-oxy acid group to the nucleophilic P component whereby the equivalent ratio of activated α-oyxy carboxylic acid functions Col in the compound containing an activated α-oxy carboxylic acid group: nucleophilic P atoms in the nucleophilic P component is from 1 : 3 to 3 : 1,
or with an activated P component, obtainable in accordance with the first step mentioned under (ii) defined above, by adding the compound containing an activated obtainable in accordance with the first step mentioned under (ii) defined above, by adding the comp group : activated P atoms in the activated P component is from 1 : 3 to 3 : 1,
whereby the mode of addition can be reversed meaning that the the respective nucleophilic P component or activated P component is added to the compound containing an activated α-oxy carboxylic acid function;
followed by adding water after completing the reaction and recovering the product formed.

In a preferred embodiment, that method is carried out for the manufacture of a compound containing an α-oxy phosphorus group selected from formulae:

R³[-O-C(R¹)(R²)ₘ(P(O)R^{a}R^{b})₂₋ₘ]ₙ -III-

R³[-C(OR¹)(R²)ₘ(P(O)R^{a}R^{b})₂₋ₘ]ₙ -IV-

is obtained by reacting an activated α-oxy-carboxylic acid selected from formulae:

R³[-(O-C(R¹)(R²)ₘ(COL)₂₋ₘ]ₙ -VIII-

R³[-C(OR¹)(R²)ₘ(COL)₂₋ₘ]ₙ -IX-

wherein the R^{a} and R^{b} groups are defined below, if these groups are already present in the used nucleophilic P component, otherwise R^{a} and/or R^{b} are OM', or R^{a} is OM' and R^{b} is H; m can be 0 or 1; n is a selected integer from 1 to 100000;;
R¹ and R² are independently selected from: H, hydrocarbon groups in branched, linear, cyclic, aromatic, heterocyclic or heteroaromatic configuration having from 1 to 100 carbon atoms; when R¹ in formulae -VIII- and -IX- contains an aromatic or heteroaromatic group, then there must be at least two alkylene carbon atoms between the aromatic or heteroaromatic group and the oxygen atom;
R³ is selected from hydrocarbon groups in branched, linear, cyclic or heterocyclic configuration having from 1 to 200000 carbon atoms, whereby [-O-C(R¹)(R²)ₘ(-O¹-C¹-COL )₂₋ₘ] in formula -VIII- and [-C(OR¹)(R²)ₘ(-O1-C1-COL)₂₋ₘ] in formula -IX- can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R³;
when n = 1, R³ can be H or Y-B[-O-A]ₓ- wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; Y is selected from hydrocarbon groups in branched, linear, cyclic, heterocyclic, aromatic or heteroaromatic configuration having from 1 to 100 carbon atoms; when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, -COZ, -O-COZ, -OR, -NR₂, - SiR'₃, -Si(OR')₃, -B(OR')₂, -P⁺R'₃, -N⁺R₃, -CN, halogen, -P(O)_{z}Z₂, -NR-COZ, - N(COR')₂, -NR-CSZ, -NR-C(NR)NR₂, -CSZ, -O-CSZ, -NR-SO₂R', -SO_{y}Z, -O-SO_{y}Z; wherein z is 0 or 1; wherein y is 0, 1 or 2; wherein Z is H, R, -OR, -NH_{2,} -NR₂, and - NHR wherein R is independently selected from H, hydrocarbon groups in branched, linear, cyclic, heterocyclic, aromatic or heteroaromatic configuration having from 1 to 100 carbon atoms; R' is independently selected from hydrocarbon groups in branched, linear, cyclic, heterocyclic, aromatic or heteroaromatic configuration having from 1 to 100 carbon atoms; if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms, if R and R' are connected to different atoms, or 2 to 100 carbon atoms, if R and R' are connected to the same atom; B can also be a direct bond when Y is H or a hydrocarbon group in branched, linear, cyclic, heterocyclic, aromatic or heteroaromatic configuration having from 1 to 100 carbon atoms;
when n is 1, R³ can be connected to R¹ and be a direct bond, while R¹ is C₁₋₁₀ alkylene group in linear configuration;
when m is 1, R¹ and R² can also be connected, with R² being a direct bond and R¹ being a C₂₋₁₂ linear alkylene group.

In the method the compound containing an activated α-oxy carboxylic acid group is selected from species as follows:
n is a selected integer from 1 to 15000;
R¹ and R² are independently selected from: hydrocarbon groups having from 1 to 20 carbon atoms;
R³ is selected from hydrocarbon groups in branched, linear, cyclic or heterocyclic configuration having from 1 to 30000 carbon atoms; when n = 1, R³ can be Y-B[-O-A]ₓ-wherein A is selected from linear and branched hydrocarbons having preferably from 2 to 10 carbon atoms and B is selected from hydrocarbon groups in branched, linear, cyclic, heterocyclic, aromatic or heteroaromatic configuration having from 1 to 50 carbon atoms; wherein Y can represent: -COZ, -O-COZ, -OR, -NR₂, -SiR'₃, -Si(OR')₃, - B(OR')₂, -P⁺R'₃, -N⁺R₃, -P(O)_{z}Z₂, -NR-COZ, -N(COR')₂, -NR-CSZ, -NR-C(NR)NR₂, - CSZ, -O-CSZ, -SO_{y}Z, -O-SO_{y}Z, -NR-SO₂R'; wherein z is 0 or 1; wherein y is 0, 1 or 2; wherein Z is R, -OR, -NR₂, and -NHR wherein R is independently selected from hydrocarbon groups in branched, linear, cyclic, heterocyclic, aromatic or heteroaromatic configuration having from 1 to 20 carbon atoms; R' is independently selected from hydrocarbon groups in branched, linear, cyclic, heterocyclic, aromatic or heteroaromatic configuration having from 1 to 20 carbon atoms; if at least two R or R' groups are present in the functional group then these groups can be connected whereby one R or R' group is a direct bond and the other is a hydrocarbon group in branched, linear, cyclic, heterocyclic, aromatic or heteroaromatic configuration having from 1 to 20 carbon atoms, if R and R' are connected to different atoms, or 2 to 20 carbon atoms, if R and R' are connected to the same atom; wherein x is 0-30.

In a preferred embodiment, n is a selected integer from 1 to 5000;
R¹ and R² are independently selected from: hydrocarbon groups in branched, linear, cyclic, aromatic, heterocyclic or heteroaromatic configuration having from 1 to 10 carbon atoms; R³ is selected from hydrocarbon groups in branched, linear, cyclic, heterocyclic configuration having from 1 to 10000 carbon atoms;
when n = 1, R³ can be Y-B[-O-A]ₓ- wherein x is 0-20; wherein A is selected from linear and branched hydrocarbons having from 2 to 6 carbon atoms and B is selected from hydrocarbon groups in branched, linear, cyclic, heterocyclic, aromatic or heteroaromatic configuration having from 1 to 50 carbon atoms; Y is selected from hydrocarbon groups in branched, linear, cyclic, heterocyclic, aromatic or heteroaromatic configuration having from 1 to 50 carbon atoms; wherein Y can represent: -COZ, -OR, -NR₂, -Cl, -Br, -I, -O-SO_{y}Z, -N(COR')₂; wherein y is 0, 1 or 2; wherein Z is R, -OR, -NR₂, and -NHR wherein R is independently selected from hydrocarbon groups in branched, linear, cyclic, heterocyclic, aromatic or heteroaromatic configuration having from 1 to 10 carbon atoms, R' is independently selected from hydrocarbon groups in branched, linear, cyclic, heterocyclic, aromatic or heteroaromatic configuration having from 1 to 10 carbon atoms; if at least two R or R' groups are present in the functional group then these can be connected whereby one R or R' group is a direct bond and the other is a hydrocarbon group in branched, linear, cyclic, heterocyclic, aromatic or heteroaromatic configuration having from 1 to 10 carbon atoms, if R and R' are connected to different atoms, or 2 to 10 carbon atoms, if R and R' are connected to the same atom; B can also be a direct bond when Y is a hydrocarbon group in branched, linear, cyclic, heterocyclic, aromatic or heteroaromatic configuration having from 1 to 50 carbon atoms;
when n is 1, R³ can be connected to R¹ and be a direct bond, while R¹ is C₁₋₈ alkylene group in linear configuration;
when m is 1, R¹ and R² can also be connected, with R² being a direct bond and R¹ being a C₂₋₈ linear alkylene group.

Most preferably the compound containing an activated α-oxy carboxylic acid group is methoxyacetyl chloride.

The nucleophilic P component is preferably selected from the following classes:
Class 1: H₃PO₃, H₃PO₂, H₄P₂O₅, H₄P₂O₆;
Class 2: R^{a}R^{b}P(O)H, R^{a}PO₂H₂;
Class 3: PX₃, R^{a}PX₂, R^{a}R^{b}PX;
Class 4: P₄Oₙ with n = 6-9;
Class 5: R^{a}R^{b}R^{c}P;
wherein X is Cl or Br; wherein R^{a} and R^{b} are independently selected from: a C₁₋₂₀ hydrocarbon chain in branched, linear, cyclic, aromatic, heterocyclic or heteroaromatic configuration, a silyl group independently substituted by C₁₋₂₀ hydrocarbon groups in branched, linear, cyclic, aromatic, heterocyclic or heteroaromatic configuration, OR" or N(R"')₂, wherein R" can be selected from a C₁₋₂₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R'" can be independently selected from H, a C₁₋₂₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration; if R^{a} or R^{b} is a N(R"')₂ group, then the two R'" groups can be connected together with one R'" group being a C₂₋₂₀ hydrocarbon chain in branched, linear, cyclic, aromatic, heterocyclic or heteroaromatic configuration and the other R'" being a direct bond; R^{a} and R^{b} can be connected, then R^{a} is a C₂₋₂₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁₋₂₀ hydrocarbon chain in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁₋₂₀ hydrocarbon chain in branched, linear, cyclic, aromatic, heterocyclic or heteroaromatic configuration and one R'" of the second N(R"')₂ group is a direct bond to this R'" group of the first N(R"')₂ group; wherein R^{c} is OR".

The nucleophilic P component is preferably selected from the following classes:
- Class 2:: R^{a}R^{b}P(O)H, R^{a}PO₂H₂;
- Class 3:: PCl₃, R^{a}PCl₂, R^{a}R^{b}PCl, PBr₃;
- Class 5:: R^{a}R^{b}R^{c}P;
wherein R^{a} and R^{b} are independently selected from: a C₁₋₁₀ hydrocarbon chain in branched, linear, cyclic, aromatic, heterocyclic or heteroaromatic configuration, a silyl group independently substituted by C₁₋₁₀ hydrocarbon groups in branched, linear, cyclic, aromatic, heterocyclic or heteroaromatic configuration, OR" or N(R"')₂, wherein R" can be selected from a C₁₋₁₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R'" can be independently selected from H, a C₁-₁₀ hydrocarbon chain in branched, linear, cyclic, aromatic, heterocyclic or heteroaromatic configuration, or a silyl group independently substituted by C₁₋₁₀ hydrocarbon groups in branched, linear, cyclic, aromatic, heterocyclic or heteroaromatic configuration; if R^{a} or R^{b} is a N(R"')₂ group, then the two R'" groups can be connected together with one R'" group being a C₂₋₁₀ hydrocarbon chain in branched, linear, cyclic, aromatic, heterocyclic or heteroaromatic configuration and the other R'" being a direct bond; R^{a} and R^{b} can be connected, then R^{a} is a C₂₋₁₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁₋₁₀ hydrocarbon chain in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁₋₁₀ hydrocarbon chain in branched, linear, cyclic, aromatic, heterocyclic or heteroaromatic configuration and one R'" of the second N(R"')₂ group is a direct bond to this R'" group of the first N(R"')₂ group; wherein R^{c} is OR".

The activator for making the compound containing an activated ⊐he activator for making the compound containing an activated )ocyclpreferably selected from one or more of the following classes:
- Class A:: organic and inorganic acid anhydrides of acids;
- Class B:: organic and inorganic acid halides of acids.

The activator may be selected from : trifluoroacetic anhydride, acetic anhydride, pivalic anhydride, phthalic anhydride, succinic anhydride, methanesulfonic anhydride, p-toluenesulfonic anhydride, trifluoromethanesulfonic anhydride, P₄O₁₀, metaphosphoric acid, polyphosphoric acid, methanesulfonyl chloride, p-toluenesulfonyl chloride, 2,2,2-trifluoroethanesulfonyl chloride, ethanesulfonyl chloride, trifluoromethanesulfonyl chloride, OPCl₃, PCl₅, SOCl₂, C₂O₂Cl₂ (oxalyl chloride), C₃N₃Cl₃ (cyanuric chloride).
In a preferred embodiment of the process, the method is conducted in the presence of an adjuvant selected from the group of: Lewis acids; Broensted acids; and combinations thereof.

The Broensted acid is a homogeneous sulfonic acid having the formula

(R*-(SO₃H)ₓ)

wherein R* is selected from:
- C₁₋₂₄ hydrocarbon groups of linear, branched, cyclic or polycyclic configuration, possibly substituted by F and/or CF₃ groups, where x is 1 to 4;
- C₆₋₁₄ aromatic or alkyl aromatic groups wherein the alkyl group can be C₆₋₂₀ where x is 1 to 3 for monoaromatic systems and 1 to 4 for diaromatic and higher systems;
- diphenyl ether or diphenylmethane where x is 1 or 2;
- C₆₋₂₀ alkyldiphenyl methane where x is 1 or 2;
- C₆₋₂₀ alkyldiphenyl ether where x is 1 or 2.

Or, the Broensted acid is a heterogeneous sulfonic acid and is selected from:
- sulfonic acids grafted onto resins comprising copolymers of styrene, ethylvinyl benzene and divinyl benzene functionalized so as to graft SO₃H groups onto the aromatic groups;
- perfluorinated resins carrying sulfonic acid groups;
- sulfonic acids deposited onto solids having a lone pair of electrons; and
- polymers and inorganic solids functionalized by chemical grafting capable of
yielding sulfonic acids.

In an alternative version the adjuvant is a carboxylic acid selected from homogeneous and heterogeneous carboxylic acids.
Preferably, the carboxylic acid is a homogeneous carboxylic acid having the formula:

(R**-(CO₂H)ₓ)

wherein R** can be selected from C₁₋₂₄ hydrocarbon groups of linear, branched, cyclic or polycyclic configuration, optionally substituted by F and/or CF₃ groups, x is 1 to 4; C₆₋₁₄ aromatic or alkyl aromatic groups wherein the alkyl group can be C₆₋₂₀ where x is 1 to 3 for monoaromatic systems and 1 to 4 for diaromatic; diphenylether or diphenylmethane where x is 1 to 2; C₆₋₂₀ alkyl diphenylmethane where x is 1 to 2; and C₆₋₂₀ alkyl diphenylether where x is 1 to 2.

The homogeneous Broensted acid may be represented by an inorganic acid selected from: H₃PO₃, H₃PO₄, polyphosphoric acid, metaphosphoric acid, phosphonic acid derivatives R'P(O)(OH)₂.

The heterogeneous Broensted acid may be represented by an inorganic acid selected from: amorphous silica-alumina; smectites; inorganic or organic acid treated clays; pillared clays; zeolites; and metal oxides ZrO₂-TiO₂, TiO₂-SiO₂; and ZrO₂-SiO₂ in 1 : 1 molar combinations, resin bound phosphonic acids.

Preferably, the adjuvant is a homogeneous Lewis acid:
- having the formula: MXₙ, wherein M represents a transition metal or main group element; X an anion of an acid or acid derivative and n is equal to the oxidation state of M.
- discrete complexes of MXₙ
- complexes obtained by combination of MXₙ with a coordinating ligand
- compounds containing main group elements, in which the main group element represents the Lewis acid site
- organometallic species.

The heterogeneous Lewis acid is represented by discretionary subclasses created by interaction/bonding of homogeneous Lewis acid with polymeric organic or inorganic backbones.

In the reaction, a solvent is present selected from: fluorinated and chlorinated hydrocarbons; aliphatic hydrocarbons; ethers; aromatic solvents; organic acetates; organic nitriles; silicon fluids; and ionic liquids.

The solvent is preferably selected from: sulfolane; anisole; fluorobenzene; chlorobenzene; tetrachloroethane; tetrachloroethylene; dichloroethane; dichloromethane; diglyme; glyme; diphenyloxide; polyalkylene glycol derivatives with capped OH groups such as OR*** where R*** is a low alkyl or acyl group; hexane; heptane; cyclohexane; dibutyl ether; diethyl ether; diisopropyl ether; dipentylether; butylmethylether; tetrahydrofuran; dioxane; tetrahydropyran; cyclopentylmethylether; toluene; benzene; xylene; ethylacetate; acetonitrile; benzonitrile; polymethylphenyl siloxane; 1-n-butyl-imidazolium trifluoromethanesulfonate, and 1-ethyl-3-methyl-1,3-imidazolium bis(trifluoromethanesulfonyl)imide.

Also in that process the gaseous CO liberated by the formation of the compound containing an α-oxy phosphorus group is collected.

The method in accordance with the invention herein is illustrated by a series of actual examples as follows:

### Example 1.

In a three-necked round-bottom flask equipped with a mechanical stirrer, a thermometer, a condenser and a dropping funnel 4.50 g (50 mmol) methoxyacetic acid was mixed with 10.5 g (50 mmol) trifluoracetic anhydride and stirred for 2 h. Slowly, 2.75 g (12.5 mmol) P₄O₆ was added drop-wise. After completed addition the reaction mixture was stirred for 4 h at 60°C. During the addition and the reaction time the evolution of CO was observed. Then 10 ml H₂O was added and the obtained liquid was analysed by ³¹P-NMR spectroscopy. Methoxymethylphosphonic acid was detected at 98.6 %w/w.

### Example 2.

In a three-necked round-bottom flask equipped with a mechanical stirrer, a thermometer, a condenser and a dropping funnel 4.50 g (50 mmol) methoxyacetic acid was mixed with 10.5 g (50 mmol) trifluoracetic anhydride and stirred for 1 h. Then 6.88 g (50 mmol) PCl₃ and 1 ml methanesulfonic acid were added drop-wise. After completed addition the reaction mixture was stirred for 6 h at 30°C. During the addition and the reaction time the evolution of CO was observed. 5 ml water was added and the obtained liquid was analysed by ³¹P-NMR spectroscopy. Methoxymethylphosphonic acid was detected at 92.3 %w/w.

### Example 3.

In a three-necked round-bottom flask equipped with a mechanical stirrer, a thermometer, a condenser and a dropping funnel 4.50 g (50 mmol) methoxyacetic acid was mixed with 10.5 g (50 mmol) trifluoracetic anhydride and stirred for 1 h. Slowly, 4.10 g (50 mmol) phosphorous acid was added drop-wise. After completed addition the reaction mixture was stirred for 2 h at 30°C. During the addition and the reaction time the evolution of CO was observed. Then 5 ml H₂O was added and the obtained liquid was analysed by ³¹P-NMR spectroscopy. Methoxymethylphosphonic acid was detected at 51.8 %w/w.

### Example 4.

In a three-necked round-bottom flask equipped with a mechanical stirrer, a thermometer, a condenser and a dropping funnel 4.50 g (50 mmol) methoxyacetic acid was mixed with 10.5 g (50 mmol) trifluoracetic anhydride and stirred for 30 min. Then 5.50 g (50 mmol) dimethylphosphite and 5 ml methanesulfonic acid were added drop-wise. After completed addition the reaction mixture was stirred for 20 h. During the addition and the reaction time the evolution of CO was observed. The obtained liquid was analysed by ³¹P-NMR spectroscopy. Dimethyl methoxymethylphosphonic acid ester was detected at 61.6 %w/w.

### Example 5.

In a three-necked round-bottom flask equipped with a mechanical stirrer, a thermometer, a condenser and a dropping funnel 4.50 g (50 mmol) methoxyacetic acid was mixed with 10.5 g (50 mmol) trifluoracetic anhydride and stirred for 30 min. Slowly, 3.3 g (50 mmol) H₃PO₂ was added drop-wise. After completed addition the reaction mixture was stirred for 4 h at room temperature. During the addition and the reaction time the evolution of CO was observed. Then 10 ml H₂O was added and the obtained liquid was filtered and analysed by ¹H- and ³¹ P-NMR spectroscopy. Methoxymethylphosphinic acid was detected at 3.4 %w/w and bis(methoxymethyl)phosphinic acid at 4.0 %w/w.

### Example 6.

In a three-necked round-bottom flask equipped with a mechanical stirrer, a thermometer, a condenser and a dropping funnel 1.80 g (20 mmol) methoxyacetic acid was mixed with 2.94 g (20 mmol) methanesulfonic anhydride and stirred for 30 min at 40°C. Slowly, 1.10 g (5 mmol) P₄O₆ was added drop-wise. After completed addition the reaction mixture was stirred for 4 h at 40°C. During the addition and the reaction time the evolution of CO was observed. Then 5 ml H₂O was added and the obtained liquid was analysed by ³¹P-NMR spectroscopy. Methoxymethylphosphonic acid was detected at 71.3 %w/w.

### Example 7.

In a three-necked round-bottom flask equipped with a mechanical stirrer, a thermometer, a condenser and a dropping funnel 4.50 g (50 mmol) methoxyacetic acid and 10.32 g (50 mmol) N,N'-dicyclohexylcarbodiimide were mixed with 30 ml acetonitrile. Slowly, 2.75 g (12.5 mmol) P₄O₆ followed by 1 ml methanesulfonic acid were added drop-wise. After completed addition the reaction mixture was stirred for 3 h at 30°C and 2 h at 80°C. During the addition and the reaction time the evolution of CO was observed. Then 20 ml H₂O was added and the formed solid was filtered off. The obtained liquid was analysed by ³¹P-NMR spectroscopy. Methoxymethylphosphonic acid was detected at 7.5 %w/w.

### Example 8.

In a three-necked round-bottom flask equipped with a mechanical stirrer, a thermometer, a condenser and a dropping funnel 4.34 g (40 mmol) methoxyacetyl chloride was mixed with 5 ml methanesulfonic acid and warmed to 30°C. Slowly, 2.20 g (10 mmol) P₄O₆ was added drop-wise. After completed addition the reaction mixture was stirred for 5 h at 30°C. During the addition and the reaction time the evolution of CO was observed. Then 5 ml H₂O was added and the obtained liquid analysed by ³¹P-NMR spectroscopy. Methoxymethylphosphonic acid was detected at 89.2 %w/w.

### Example 9.

In a three-necked round-bottom flask equipped with a mechanical stirrer, a thermometer, a condenser and a dropping funnel 4.50 g (50 mmol) methoxyacetic acid was mixed with 5.36 g (50 mmol) acetic anhydride and stirred for 1 h. Slowly, 2.75 g (12.5 mmol) P₄O₆ followed by 2 ml methanesulfonic acid were added drop-wise. After completed addition the reaction mixture was stirred for 4 h at 40°C. During the addition and the reaction time the evolution of CO was observed. Then 5 ml H₂O was added and the obtained liquid analysed by ³¹P-NMR spectroscopy. Methoxymethylphosphonic acid was detected at 30.8 %w/w.

### Example 10.

In a three-necked round-bottom flask equipped with a mechanical stirrer, a thermometer, a condenser and a dropping funnel 5.66 g (20 mmol) phosphorus pentoxide was mixed with 20 ml methanesulfonic acid and 7.20 g (80 mmol) methoxyacetic acid and stirred for 3 h. During the addition and the reaction time the evolution of CO was observed. Then 4.40 g (20 mmol) P₄O₆ was added dropwise. The obtained mixture was stirred for 3 h. 10 ml H₂O was added and the obtained liquid analysed by ³¹P-NMR spectroscopy. Methoxymethylphosphonic acid was detected at 61.5 %w/w.

### Example 11.

In a three-necked round-bottom flask equipped with a mechanical stirrer, a thermometer, a condenser and a dropping funnel 3.60 g (40 mmol) methoxyacetic acid and 6.49 g (40 mmol) carbonyldiimidazole were mixed with 5 ml acetonitrile and stirred for 30 min. 10ml methanesulfonic acid and 2.20 g (10 mmol) P₄O₆ were added drop-wise. After completed addition the reaction mixture was stirred for 5 h at 50 °C. During the addition and the reaction time the evolution of CO was observed. Then 10 ml H₂O was added and the obtained liquid analysed by ³¹P-NMR spectroscopy. Methoxymethylphosphonic acid was detected at 4.9 %w/w.

### Example 12.

In a three-necked round-bottom flask equipped with a mechanical stirrer, a thermometer, a condenser and a dropping funnel 4.50 g (50 mmol) methoxyacetic acid was mixed with 10.50 g (50 mmol) trifluoroacetic anhydride and stirred for 1 h. Slowly, 5.50 g (50 mmol) dimethylphosphite and 1.19 g (2.5 mmol) aluminium trifluoromethanesulfonate were added. After completed addition the reaction mixture was stirred for 4 h at 50 °C. During the addition and the reaction time the evolution of CO was observed. The obtained liquid analysed by ³¹P-NMR spectroscopy. Dimethyl-methoxymethylphosphonic acid was detected at 38.5 %w/w.

### Example 13.

In a three-necked round-bottom flask equipped with a mechanical stirrer, a thermometer, a condenser and a dropping funnel 0.82 g (4 mmol) 3,6-dioxadodecyloic acid was mixed with 0.84 g (5 mmol) trifluoracetic anhydride and stirred for 15 min. Slowly, 2.75 g (12.5 mmol) P₄O₆ was added drop-wise. After completed addition the reaction mixture was stirred for 2 h. During the addition and the reaction time the evolution of CO was observed. Then 1 ml H₂O was added and the obtained liquid was analysed by ¹H- and ³¹P-NMR spectroscopy. 2,5-dioxaundecanyl-l-phosphonic acid was detected at 23.5 %w/w.

### Example 14.

In a three-necked round-bottom flask equipped with a mechanical stirrer, a thermometer, a condenser and a dropping funnel 1.01 g (4 mmol) 5-phthalimido-3-oxapentanoic acid and 0.70 g (4 mmol) methansulfonic anhydride were mixed with 3 ml acetonitrile and stirred for 1 h at 40 °C. Slowly, 0.22 g (1 mmol) P₄O₆ was added. After completed addition the reaction mixture was stirred for 4 h at 60 °C. During the addition and the reaction time the evolution of CO was observed. Then 2 ml H₂O was added and the obtained liquid was analysed by ³¹P-NMR spectroscopy. 4-Phthalimido-2-oxabutanyl-1-phosphonic acid was detected at 23.7 %w/w.

### Example 15.

In a three-necked round-bottom flask equipped with a mechanical stirrer, a thermometer, a condenser and a dropping funnel 8.91 g (50 mmol) 3,6,9-trioxadecanoic acid was mixed with 10.50 g (50 mmol) trifluoroacetic anhydride and stirred for 1 h. 2.75 g (12.5 mmol) P₄O₆ was added drop-wise. After completed addition the reaction mixture was stirred for 5 h at 50 °C. During the addition and the reaction time the evolution of CO was observed. Then 5 ml H₂O was added and the obtained liquid was analysed by ¹H- and ³¹P-NMR spectroscopy. 2,5,8-Trioxanonyl-1-phosphonic acid was detected at 22.5 %w/w.

### Example 16.

In a three-necked round-bottom flask equipped with a mechanical stirrer, a thermometer, a condenser and a dropping funnel 11.61 g (0.1 mol) 2-tetrahydrofuroic acid was mixed with 10.21 g (0.1 mol) acetic anhydride and stirred for 1 h. 5.50 g (0.025 mol) P₄O₆ was added drop-wise. After completed addition the reaction mixture was stirred for 5 h at 30 °C. During the reaction time the evolution of CO was observed. After completed reaction time 10 ml H₂O was added. The obtained liquid was analysed by ¹H- and ³¹ P-NMR spectroscopy. 2-Phosphono-tetrahydrofuran was detected at 72.2 %w/w.

### Example 17.

In a three-necked round-bottom flask equipped with a mechanical stirrer, a thermometer, a condenser and a dropping funnel 3.60 g (40 mmol) methoxyacetic acid was mixed with 25 ml dichloromethane and 5.07 g (40 mmol) oxalyl chloride was added. The resulting mixture was stirred for 20 h. Slowly 2.20 g (10 mmol) P₄O₆ was added. After completed addition the reaction mixture was stirred for 6 h at 30 °C. During the addition and the reaction time the evolution of CO was observed. 10 ml H₂O was added, the aqueous phase was separated and analysed by ³¹P-NMR spectroscopy. Methoxymethylphosphonic acid was detected at 10.8 %w/w.

### Example 18.

In a three-necked round-bottom flask equipped with a mechanical stirrer, a thermometer, a condenser and a dropping funnel 2.70 g (30 mmol) methoxyacetic acid was mixed with 6.30 g (30 mmol) trifluoracetic anhydride and stirred for 1 h. Slowly, 4.26 g (30 mmol) phenylphosphinic acid and 0.5 ml methanesulfonic acid were added. After completed addition the reaction mixture was stirred for 3 h at 60 °C. During the addition and the reaction time the evolution of CO was observed. Then 5 ml H₂O was added and the obtained liquid was analysed by ¹H- and ³¹P-NMR spectroscopy. Methoxymethyl-phenylphosphinic acid was detected at 58.7 %w/w.

### Example 19.

In a three-necked round-bottom flask equipped with a mechanical stirrer, a thermometer, a condenser and a dropping funnel 3.60 g (40 mmol) methoxyacetic acid was mixed with 4.76 g (40 mmol) thionyl chloride and stirred for 2 h at 40 °C. Slowly, 2.20 g (10 mmol) P₄O₆ was added, followed by 2 ml methanesulfonic acid. After completed addition the reaction mixture was stirred for 3 h at 40 °C. During the addition and the reaction time the evolution of CO was observed. Then 2 ml H₂O was added and the obtained liquid was analysed by ¹H- and ³¹P-NMR spectroscopy. Methoxymethylphosphonic acid was detected at 66.5 %w/w.

### Example 20.

In a three-necked round-bottom flask equipped with a mechanical stirrer, a thermometer, a condenser and a dropping funnel 1.90 g (25 mmol) glycolic acid was mixed with 10.50 g (50 mmol) trifluoroacetic anhydride and stirred for 1 h. 1.39 g (6.25 mmol) P₄O₆ was added drop-wise. After completed addition the reaction mixture was stirred for 6 h at 70 °C. During the reaction time the evolution of CO was observed. After cooling to room temperature 5 ml H₂O was added. The obtained liquid was analysed by ³¹P-NMR spectroscopy. Hydroxymethylphosphonic acid was detected at 0.5 %w/w.

### Example 21.

In a three-necked round-bottom flask equipped with a mechanical stirrer, a thermometer, a condenser and a dropping funnel 3.35 g (25 mmol) diglycolic acid was mixed with 10.50 g (50 mmol) trifluoroacetic anhydride and stirred for 1 h at 40 °C. 2.75 g (12.5 mmol) P₄O₆ was added drop-wise. After completed addition the reaction mixture was stirred for 3 h at 80 °C. During the reaction time the evolution of CO was observed. After cooling to room temperature 10 ml H₂O was added. The obtained liquid was analysed by ³¹P-NMR spectroscopy. Hydroxymethylphosphonic acid was detected at 1.2 %w/w.

### Example 22.

In a three-necked round-bottom flask equipped with a mechanical stirrer, a thermometer, a condenser and a dropping funnel 1.64 g (20 mmol) phosphorous acid and 10.45 g (60 mmol) methanesulfonic anhydride were mixed and stirred for 1 h at 70 °C. Slowly, 1.80 g (20 mmol) methoxyacetic acid was added drop-wise and stirring was continued for 2 h at 70 °C. During the addition and the reaction time the evolution of CO was observed. Then 2 ml H₂O was added and the obtained liquid was analysed by ³¹P-NMR spectroscopy. Methoxymethylphosphonic acid was detected at 94.8 %w/w.

### Example 23.

In a three-necked round-bottom flask equipped with a mechanical stirrer, a thermometer, a condenser and a dropping funnel 1.65 g (15 mmol) dimethyl phosphite and 4.23 g (15 mmol) trifluoromethanesulfonic anhydride were mixed and stirred for 1 h. Slowly, 1.35 g (15 mmol) methoxyacetic acid was added drop-wise and stirring was continued for 3 h at room temperature. During the addition and the reaction time the evolution of CO was observed. Then the obtained liquid was analysed by ³¹P-NMR spectroscopy. Dimethyl methoxymethylphosphonic acid was detected at 2.1 %w/w. Methyl methoxymethylphosphonic acid was detected at 43.2 %w/w and methoxymethylphosphonic acid was detected at 9.1 %w/w arising from partial hydrolysis of the desired reaction product.

### Example 24.

In a three-necked round-bottom flask equipped with a mechanical stirrer, a thermometer, a condenser and a dropping funnel 10.5 g (50 mmol) trifluoracetic anhydride was cooled to 10 °C. While stirring slowly 1.83 g (8.3 mmol) P₄O₆ was added drop-wise. After completed addition the reaction mixture was stirred for 1 h at 10 °C and 30 min. at 20 °C. Then 2.99 g (33.2 mmol) methoxyacetic acid was added drop-wise and stirring was continued for 6 h at room temperature. During the addition and the reaction time the evolution of CO was observed. Then 2 ml H₂O was added and the obtained liquid was analysed by ³¹P-NMR spectroscopy. Methoxymethylphosphonic acid was detected at 39.7 %w/w.

### Example 25.

In a three-necked round-bottom flask equipped with a mechanical stirrer, a thermometer, a condenser and a dropping funnel 4.10 g (50 mmol) phosphorous acid and 10.5 g (50 mmol) trifluoracetic anhydride were mixed and stirred for 1 h. Then 4.50 g (50 mmol) methoxyacetic acid was added drop-wise and stirring was continued for 5 h at 40 °C. During the addition and the reaction time the evolution of CO was observed. Then 5 ml H₂O was added and the obtained liquid was analysed by ³¹P-NMR spectroscopy. Methoxymethylphosphonic acid was detected at 50.1 %w/w.

### Example 26.

In a three-necked round-bottom flask equipped with a mechanical stirrer, a thermometer, a condenser and a dropping funnel 1.37 g (17 mmol) phosphorous acid and 10.5 g (50 mmol) trifluoracetic anhydride were mixed and stirred for 1 h. Then 3.03 g (17 mmol) 3,6,9-trioxadecanoic acid was added drop-wise and stirring was continued for 6 h at 50 °C. During the addition and the reaction time the evolution of CO was observed. Then 5 ml H₂O was added and the obtained liquid was analysed by ³¹P-NMR spectroscopy. 2,5,8-Trioxanonyl-1-phosphonic acid was detected at 90.4 %w/w.

### Example 27.

In a three-necked round-bottom flask equipped with a mechanical stirrer, a thermometer, a condenser and a dropping funnel 4.26 g (30 mmol) phenyl phosphinic acid and 10.45 g (60 mmol) methanesulfonic anhydride were mixed and stirred for 30 min at 60 °C. Then 2.70 g (30 mmol) methoxyacetic acid was added drop-wise and stirring was continued for 3 h at 60 °C. During the addition and the reaction time the evolution of CO was observed. Then 5 ml H₂O was added and the obtained liquid was analysed by ³¹P-NMR spectroscopy. Methoxymethyl-phenyl-phosphinic acid was detected at 14.0 %w/w.

### Example 28.

In a three-necked round-bottom flask equipped with a mechanical stirrer, a thermometer, a condenser and a dropping funnel 0.82 g (10 mmol) phosphorous acid and 6.19 g (30 mmol) N,N'-dicyclohexylcarbodiimide were mixed with 10 ml acetonitrile and stirred for 2 h. Then 0.90 g (10 mmol) methoxyacetic acid and 0.2 ml trifluoromethansulfonic acid were added drop-wise and stirring was continued for 6 h at 60 °C. During the addition and the reaction time the evolution of CO was observed. Then 10 ml H₂O was added, the formed precipitate was filtered off and the obtained liquid was analysed by ³¹P-NMR spectroscopy. Methoxymethylphosphonic acid was detected at 4.5 %w/w.

### Example 29.

In a three-necked round-bottom flask equipped with a mechanical stirrer, a thermometer, a condenser and a dropping funnel 0.82 g (10 mmol) phosphorous acid and 5.23 g (30 mmol) methanesulfonic anhydride were mixed and stirred for 1 h at 80 °C. Then 1.09 g (10 mmol) methoxyacetyl chloride was added drop-wise and stirring was continued for 2 h at 80 °C. During the addition and the reaction time the evolution of CO was observed. Then 5 ml H₂O was added and the obtained liquid was analysed by ³¹P-NMR spectroscopy. Methoxymethylphosphonic acid was detected at 96.3 %w/w.

### Example 30.

In a three-necked round-bottom flask equipped with a mechanical stirrer, a thermometer, a condenser and a dropping funnel 2.84 g (10 mmol) P₄O₁₀ was dissolved in 5 ml methanesulfonic acid and 2.70 g (30 mmol) methoxyacetic acid was added and the mixture was stirred for 2.5 h at 50 °C. During the addition and the reaction time the evolution of CO was observed. Then 3.72 g (30 mmol) trimethylphosphite was added drop-wise and stirring was continued for 4 h at 50 °C. The obtained liquid was analysed by ³¹P-NMR spectroscopy. Dimethyl methoxymethylphosphonic acid was detected at 49.2 %w/w. Methyl methoxymethylphosphonic acid was detected at 20.9 %w/w arising form partial hydrolysis of the desired reaction product.

## Claims

1. A method for the manufacture of compounds containing an α-oxy phosphorus group having the formulae:
-O¹-C¹-P¹(O)< -I-
comprising the steps of:
reacting compounds containing an α-oxy carboxylic acid group having the formula:
-O¹-C¹-COOM' -II-
wherein the oxygen atom O¹ carries two substituents whereby the first substituent is C¹ and the second can be selected from a H or a C atom carrying three further substituents; wherein the carbon atom C¹ carries four substituents whereby the first substituent is O¹, the second is the P¹(O)< group in formula -I- or the COOM' group in formula -ll- and the third and fourth can be independently selected from a H or a C group; wherein the phosphorus atom P¹ carries four substituents whereby the first substituent is C¹, the second is the O atom and the third and fourth can be independently selected from H, a C group, an O group carrying one further substituent selected from a H or a C group, or a N group carrying two further substituents independently selected from a H or C group, with the limitation that only one substituent of the third and fourth substituent of P¹ can be a H group; wherein M' is represented by H or alkaline, earth alkaline, ammonium or protonated amine species;
(i) by reacting the compound containing an α-oxy carboxylic acid group with an activator by adding the activator to the compound containing an α-oxy carboxylic acid group whereby the equivalent ratio of α-oxy carboxylic acid functions COOM' in the compound containing an α-oxy carboxylic acid group : activating functions in the activator is from 1 : 3 to 3 : 1 obtaining a compound containing an activated α-oxy carboxylic acid group, followed by adding to said compound a nucleophilic P component, wherein the phosphorus atom has the oxidation state +1 or +3, in an equivalent ratio of activated α-oxy carboxylic acid functions COL in the compound containing an activated α-oxy carboxylic acid group : nucleophilic P atoms in the nucleophilic P component of from 1 : 3 to 3 : 1; or
(ii) by adding the activator to a nucleophilic P component, wherein the phosphorus atom has the oxidation state +1 or +3, in an equivalent ratio of nucleophilic P atoms in the nucleophilic P component : activating functions in the activator of from 1 : 6 to 3 : 1, obtaining an activated P component, followed by adding the activated P component to the compound containing an α-oxy carboxylic acid group in an equivalent ratio of α-oxy carboxylic acid functions COOM' in the compound containing an α-oxy carboxylic acid group : activated P atoms in the activated P component of from 1 : 3 to 3 : 1; or
(iii) by reacting a compound containing an activated α-oxy carboxylic acid group obtained in accordance with the first step mentioned under (i) with the activated P component obtained in accordance with the first step mentioned under (ii) whereby the equivalent ratio of activated P atoms in the activated P component : activated α-oxy carboxylic acid functions COL in the compound containing an activated α-oxy carboxylic acid group is from 1 : 3 to 3 : 1, by adding the activated P component to the compound containing an activated α-oxy carboxylic acid group;
whereby L is a good leaving group;
whereby the mode of addition can be reversed meaning that the compound containing an α-oxy carboxylic acid function or the nucleophilic P component is added to the activator, and the the compound containing an α-oxy carboxylic acid function or the compound containing an activated α-oxy carboxylic acid function is added to the nucleophilic P component or the activated P component;
followed by adding water after completing the reaction and recovering the product formed.

2. The method is in accordance with Claim 1 wherein the compound containing an α-oxy carboxylic acid group is reacted with an activator, and wherein the equivalent ratio of α-oxy carboxylic acid functions in the compound containing an α-oxy carboxylic acid group : activating functions in the activator is selected from 1 : 2 to 2 : 1.

3. A method for the manufacture of compounds containing an α-oxy phosphorus group having the formula
-O¹-C¹-P¹(O)< -I-
comprising the steps of
reacting a compound containing an activated ⊐-oxy carboxylic acid group having the formula:
-O¹-C¹-COL -VII-
wherein the oxygen atom O¹ carries two substituents whereby the first substituent is C¹ and the second can be selected from a H or a C atom carrying three further substituents; wherein the carbon atom C¹ carries four substituents whereby the first substituent is O¹, the second is the P¹(O)< group in formula -I- or the COOM' group in formula -ll- and the third and fourth can be independently selected from a H or a C group; wherein the phosphorus atom P¹ carries four substituents whereby the first substituent is C¹, the second is the O atom and the third and fourth can be independently selected from H, a C group, an O group carrying one further substituent selected from a H or a C group, or a N group carrying two further substituents independently selected from a H or C group, with the limitation that only one substituent of the third and fourth substituent of P¹ can be a H group; wherein M' is represented by H or alkaline, earth alkaline, ammonium or protonated amine species;
and wherein L is a good leaving group;
with a nucleophilic P component, wherein the phosphorus atom has the oxidation state +1 or +3, by adding the compound containing the activated ⊐-oxy carboxylic acid group -VII-_ to the nucleophilic P component whereby the equivalent ratio of activated α-oxy carboxylic acid functions COL in the compound containing an activated α-oxy carboxylic acid group : nucleophilic P atoms in the nucleophilic P component is from 1: 3 to 3 : 1,
or with an activated P component, by adding the compound containing an activated ⊐-oxy carboxylic acid group to the activated P component whereby the equivalent ratio of activated α-oxy carboxylic acid functions COL in the compound containing an activated
α -oxy carboxylic acid group : activated P atoms in the activated P component is from 1 : 3 to 3 : 1,
whereby the mode of addition can be reversed meaning that the respective nucleophilic P component or activated P component is added to the compound containing an activated α-oxy carboxylic acid function;
followed by adding water after completing the reaction and recovering the product formed,
wherein said activated ⊐-oxy carboxylic acid group having the formula -VII- is obtainable by reacting a compound containing an α-oxy carboxylic acid group having the formula:
-O¹-C¹-COOM' -II-
wherein -O¹-C¹- have the meaning as stated above and M' is represented by H or alkaline, earth alkaline, ammonium or protonated amine species;
with an activator by adding the activator to the compound containing an α-oxy carboxylic acid group whereby the equivalent ratio of α-oxy carboxylic acid functions COOM' in the compound containing an α-oxy carboxylic acid group : activating functions in the activator is from 1 : 3 to 3 : 1;
and wherein said activated P component is obtainable by adding an activator to a nucleophilic P component, wherein the phosphorus atom has the oxidation state +1 or +3, in an equivalent ratio of nucleophilic P atoms in the nucleophilic P component: activating functions in the activator of from 1 : 6 to 3 : 1.

4. The method according to any one of claim 1 to 3, wherein L is a good leaving group; selected from -Cl, -Br, -l, -OSO₂R^{e}, -OC(O)R^{e} wherein R^{e} is a C₁₋₃₀ hydrocarbon chain in branched, linear, cyclic, aromatic, heterocyclic or heteroaromatic configuration or a C₁-₃₀ hydrocarbon chain in branched, linear or cyclic partially or fully substituted with F or Cl;

5. The method in accordance with claim 1 or 3 for the manufacture of a compound containing an α-oxy phosphorus group selected from formulae:
R3[-O-C(R¹)(R²)ₘ(P(O)R^{a}R^{b})₂₋ₘ]ₙ -III-
R³[-C(OR¹)(R²)ₘ(P(O)R^{a}R^{b})₂₋ₘ]ₙ -IV-
which is obtained by reacting an α-oxy-carboxylic acid derivative selected from formulae:
R³[-(O-C(R¹)(R²)ₘ(COOM')₂₋ₘ]ₙ -V-
R3[-C(OR¹)(R²)ₘ(COOM')₂₋ₘ]ₙ -VI-
in the method according to claim 1, or which is obtained by reacting an α-oxy-carboxylic acid selected from formulae:
R³[-(O-C(R¹)(R²)ₘ(COL)₂₋ₘ]ₙ -VIII-
R³[-C(OR¹)(R²)ₘ(COL)₂₋ₘ]ₙ -IX-
in the method of claim 3,
wherein the R^{a} and R^{b} groups are defined below, if these groups are already present in the used nucleophilic P component, otherwise R^{a} and/or R^{b} are OM', or R^{a} is OM' and R^{b} is H; m can be 0 or 1; n is a selected integer from 1 to 100000; M' is represented by H or alkaline, earth alkaline, ammonium or protonated amine species;
L is selected from -Cl, -Br, -l, -OSO₂R^{e}, -OC(O)R^{e} wherein R^{e} is a C₁-₃₀ hydrocarbon chain in branched, linear, cyclic, aromatic, heterocyclic or heteroaromatic configuration or a C₁-₃₀ hydrocarbon chain in branched, linear or cyclic partially or fully substituted with F or Cl;
R¹ and R² are independently selected from: H, hydrocarbon groups in branched, linear, cyclic, aromatic, heterocyclic or heteroaromatic configuration having from 1 to 100 carbon atoms; when R¹ in formulae -IV- and -VI- contains an aromatic or heteroaromatic group, then there must be at least two alkylene carbon atoms between the aromatic or heteroaromatic group and the oxygen atom;
R³ is selected from hydrocarbon groups in branched, linear, cyclic or heterocyclic configuration having from 1 to 200000 carbon atoms, whereby [-O-C(R¹)(R²)ₘ(COOM')₂₋ₘ] in formula -V- and [-C(OR¹)(R²)ₘ(COOM')₂₋ₘ] in formula -VI-can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R³;
when n = 1, R³ can be H or Y-B[-O-A]ₓ wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; Y is selected from hydrocarbon groups in branched, linear, cyclic, heterocyclic, aromatic or heteroaromatic configuration having from 1 to 100 carbon atoms; when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, -COZ, -O-COZ, -OR, -NR₂, - SiR'₃, -Si(OR')₃, -B(OR')₂, -P⁺R'₃, -N⁺R₃, -CN, halogen, -P(O)_{z}Z₂, -NR-COZ, - N(COR')₂ -NR-CSZ, -NR-C(NR)NR₂, -CSZ, -O-CSZ, -NR-SO₂R', -SO_{y}Z, -O-SO_{y}Z;
wherein z is 0 or 1; wherein y is 0, 1 or 2; wherein Z is H, R, -OR, -NH₂, -NR₂, and - NHR wherein R is independently selected from H, hydrocarbon groups in branched, linear, cyclic, heterocyclic, aromatic or heteroaromatic configuration having from 1 to 100 carbon atoms; R' is independently selected from hydrocarbon groups in branched, linear, cyclic, heterocyclic, aromatic or heteroaromatic configuration having from 1 to 100 carbon atoms; if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms, if R and R' are connected to different atoms, or 2 to 100 carbon atoms, if R and R' are connected to the same atom; B can also be a direct bond when Y is H or a hydrocarbon group in branched, linear, cyclic, heterocyclic, aromatic or heteroaromatic configuration having from 1 to 100 carbon atoms;
when n is 1, R³ can be connected to R¹ and be a direct bond, while R¹ is C₁-₁₀ alkylene group in linear configuration;
when m is 1, R¹ and R² can also be connected, with R² being a direct bond and R¹ being a C₂₋₁₂ linear alkylene group.

6. The method in accordance with Claim 5 wherein n is a selected integer from 1 to 15000;
R¹ and R² are independently selected from: hydrocarbon groups having from 1 to 20 carbon atoms;
R³ is selected from hydrocarbon groups in branched, linear, cyclic or heterocyclic configuration having from 1 to 30000 carbon atoms; when n = 1, R³ can be Y-B[-O-A]ₓ wherein A is selected from linear and branched hydrocarbons having preferably from 2 to 10 carbon atoms and B is selected from hydrocarbon groups in branched, linear, cyclic, heterocyclic, aromatic or heteroaromatic configuration having from 1 to 50 carbon atoms; wherein Y can represent: -COZ, -O-COZ, -OR, -NR₂, -SiR'₃, -Si(OR')₃, - B(OR')₂, -P⁺R'₃, -N⁺R₃, -P(O)_{z}Z₂, -NR-COZ, -N(COR')₂, -NR-CSZ, -NR-C(NR)NR₂, - CSZ, -O-CSZ, -SO_{y}Z, -O-SO_{y}Z, -NR-SO₂R'; wherein z is 0 or 1; wherein y is 0, 1 or 2; wherein Z is R, -OR, -NR₂, and -NHR wherein R is independently selected from hydrocarbon groups in branched, linear, cyclic, heterocyclic, aromatic or heteroaromatic configuration having from 1 to 20 carbon atoms; R' is independently selected from hydrocarbon groups in branched, linear, cyclic, heterocyclic, aromatic or heteroaromatic configuration having from 1 to 20 carbon atoms; if at least two R or R' groups are present in the functional group then these groups can be connected whereby one R or R' group is a direct bond and the other is a hydrocarbon group in branched, linear, cyclic, heterocyclic, aromatic or heteroaromatic configuration having from 1 to 20 carbon atoms, if R and R' are connected to different atoms, or 2 to 20 carbon atoms, if R and R' are connected to the same atom; wherein x is 0-30.

7. The method in accordance with claim 6 wherein the compound containing an α-oxy carboxylic acid group group is selected from:
glycolic acid;
diglycolic acid;
methoxyacetic acid;
3,6,9-trioxadecanoic acid;
5-chloro-3-oxapentanoic acid;
5-amino-3-oxapentanoic acid;
2-tetrahydrofuroic acid;
2-methoxy-butane-1,4-dioic acid,
or the respective activated compounds where the hydroxy group of the acid is replaced by a group L.

8. The method in accordance with any one of Claims 1 to 7 wherein the nucleophilic P component is selected from the following classes:
Class 1: H₃PO₃, H₃PO₂, H₄P₂O₅, H₄P₂O₆;
Class 2: R^{a}R^{b}P(O)H, R^{a}PO₂H₂;
Class 3: PX₃, R^{a}PX₂, R^{a}R^{b}PX;
Class 4: P₄Oₙ with n = 6-9;
Class 5: R^{a}R^{b}R^{c}P;
wherein X is Cl or Br; wherein R^{a} and R^{b} are independently selected from: a C₁-₂₀ hydrocarbon chain in branched, linear, cyclic, aromatic, heterocyclic or heteroaromatic configuration, a silyl group independently substituted by C₁-₂₀ hydrocarbon groups in branched, linear, cyclic, aromatic, heterocyclic or heteroaromatic configuration, OR" or N(R"')₂, wherein R" can be selected from a C₁₋₂₀ hydrocarbon chain in branched, linear, cyclic, aromatic, heterocyclic or heteroaromatic configuration, or a silyl group independently substituted by C₁-₂₀ hydrocarbon groups in branched, linear, cyclic, aromatic, heterocyclic or heteroaromatic configuration, wherein R'" can be independently selected from H, a C₁-₂₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration; if R^{a} or R^{b} is a N(R"')₂ group, then the two R'" groups can be connected together with one R'" group being a C₂₋₂₀ hydrocarbon chain in branched, linear, cyclic, aromatic, heterocyclic or heteroaromatic configuration and the other R'" being a direct bond; R^{a} and R^{b} can be connected, then R^{a} is a C₂₋₂₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁-₂₀ hydrocarbon chain in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁-₂₀ hydrocarbon chain in branched, linear, cyclic, aromatic, heterocyclic or heteroaromatic configuration and one R'" of the second N(R"')₂ group is a direct bond to this R'" group of the first N(R"')₂ group; wherein R^{c} is OR".

9. The method is in accordance with Claim 8 wherein the nucleophilic P component is selected from the following classes:
Class 2: R^{a}R^{b}P(O)H, R^{a}PO₂H₂;
Class 3: PCl₃, R^{a}PCl₂, R^{a}R^{b}PCl, PBr₃;
Class 5: R^{a}R^{b}R^{c}P;
wherein R^{a} and R^{b} are independently selected from: a C₁₋₁₀ hydrocarbon chain in branched, linear, cyclic, aromatic, heterocyclic or heteroaromatic configuration, a silyl group independently substituted by C₁₋₁₀ hydrocarbon groups in branched, linear, cyclic, aromatic, heterocyclic or heteroaromatic configuration, OR" or N(R"')₂, wherein R" can be selected from a C₁₋₁₀ hydrocarbon chain in branched, linear, cyclic, aromatic, heterocyclic or heteroaromatic configuration, or a silyl group independently substituted by C₁₋₂₀ hydrocarbon groups in branched, linear, cyclic, aromatic, heterocyclic or heteroaromatic configuration, wherein R'" can be independently selected from H, a C₁₋₁₀ hydrocarbon chain in branched, linear, cyclic, aromatic, heterocyclic or heteroaromatic configuration, or a silyl group independently substituted by C₁₋₁₀ hydrocarbon groups in branched, linear, cyclic, aromatic, heterocyclic or heteroaromatic configuration; if R^{a} or R^{b} is a N(R"')₂ group, then the two R'" groups can be connected together with one R'" group being a C₂₋₁₀ hydrocarbon chain in branched, linear, cyclic, aromatic, heterocyclic or heteroaromatic configuration and the other R'" being a direct bond; R^{a} and R^{b} can be connected, then R^{a} is a C₂₋₁₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁₋₁₀ hydrocarbon chain in branched, linear, cyclic, aromatic, heterocyclic or heteroaromatic configuration and the R" of the second OR" group a direct bond; if R^{a} and R^{b} are N(R"')₂ groups, then one R'" group of the first N(R"')₂ group can be a C₁₋₁₀ hydrocarbon chain in branched, linear, cyclic, aromatic, heterocyclic or heteroaromatic configuration and one R"' of the second N(R"')₂ group is a direct bond to this R'" group of the first N(R"')₂ group; wherein R^{c} is OR".

10. The method in accordance with any one of Claims 1 to 9 wherein the activator is selected from one or more of the following classes:
Class A: organic and inorganic acid anhydrides of acids;
Class B: organic and inorganic acid halides;
Class C: carbonate derivatives R^{e}OC(O)-O-C(O)-OR^{e}, Cl-C(O)-OR^{e} and R^{f}C(O)R^{f};
Class D: carbodiimides R^{e}-N=C=N-R^{e};
wherein R^{e} is a C₁₋₂₀ hydrocarbon chain in branched, linear, cyclic, aromatic, heterocyclic or heteroaromatic configuration or a C₁₋₂₀ hydrocarbon chain in branched, linear or cyclic partially or fully substituted with F or Cl; wherein R^{f} is a is C₁₋₂₀ hydrocarbon chain in heterocyclic or heteroaromatic configuration containing at least one nitrogen atom that is bound to the central carbonyl carbon atom in R^{f}C(O)R^{f}.

11. The method is in accordance with Claim 10 wherein the activator is selected from: trifluoroacetic anhydride, acetic anhydride, pivalic anhydride, phthalic anhydride, succinic anhydride, methanesulfonic anhydride, p-toluenesulfonic anhydride, trifluoromethanesulfonic anhydride, P₄O₁₀, metaphosphoric acid, polyphosphoric acid, methanesulfonyl chloride, p-toluenesulfonyl chloride, 2,2,2-trifluoroethanesulfonyl chloride, ethanesulfonyl chloride, trifluoromethanesulfonyl chloride, OPCl₃, PCl₅, SOCl₂, C₂O₂Cl₂ (oxalyl chloride), C₃N₃Cl₃ (cyanuric chloride), SOBr₂, PBr₃, BBr₃, di-tert. butyl dicarbonate, N,N'-disuccinimidyl carbonate, bis(pentafluorophenyl) carbonate, ethyl chloroformate, 4-nitrophenyl chloroformate, carbonyldiimidazole, N,N'-dicyclohexylcarbodiimide, N,N'-diisopropylcarbodiimide.

12. The method is in accordance with any one of Claims 1 to 8 wherein the equivalent ratio of nucleophilic P atoms in the nucleophilic P component: activating functions in the activator from 1 : 4 to 2 : 1.

13. The method in accordance with any one of Claims 1 to 12 wherein the process is conducted in the presence of an adjuvant selected from the group of: Lewis acids; Broensted acids; and combinations thereof.

14. The method in accordance with Claim 13 wherein the adjuvant is selected from the group consisting of homogenous sulfonic acids; heterogenous sulfonic acids; homogenous carboxylic acids; heterogenous carboxylic acids; inorganic acids selected from H₃PO₃, H₃PO₄, polyphosphoric acid, metaphosphoric acid and phosphoric acid derivatives; inorganic acids selected from: amorphous silica-alumina, smectites, inorganic or organic acid treated clays, pillared clays, zeolites, metal oxides ZrO₂-TiO₂, TiO₂-SiO₂, ZrO₂-SiO₂ in 1 : 1 molar combinations; and resin bound phosphoric acid;
homogenous Lewis acids selected from
- compounds having the formula: MXₙ, wherein M represents a transition metal or main group element; X an anion of an acid or acid derivative and n is equal to the oxidation state of M.
- discrete complexes of MXₙ
- complexes obtained by combination of MXₙ with a coordinating ligand
- compounds containing main group elements, in which the main group element represents the Lewis acid site, and
- organometallic species; and
heterogenous Lewis acids obtained by interaction/bonding of homogenous Lewis acids with the backbones of organic or inorganic polymers.

15. The method in accordance with any one of Claims 1 to 14 wherein a solvent is present selected from: fluorinated and chlorinated hydrocarbons; aliphatic hydrocarbons; ethers; aromatic solvents; organic acetates; organic nitriles; silicon fluids; and ionic liquids.
